(19) Europäisches Patentamt / European Patent Office / Office européen des brevets

(11) **EP 4 503 304 A1**

(12) **EUROPEAN PATENT APPLICATION**
published in accordance with Art. 153(4) EPC

(43) Date of publication:
**05.02.2025 Bulletin 2025/06**

(21) Application number: **23779274.2**

(22) Date of filing: **06.03.2023**

(51) International Patent Classification (IPC):
$H01M\ 50/443$ (2021.01)    $C08F\ 257/02$ (2006.01)
$H01G\ 11/24$ (2013.01)    $H01G\ 11/30$ (2013.01)
$H01G\ 11/52$ (2013.01)    $H01M\ 4/13$ (2010.01)
$H01M\ 4/62$ (2006.01)    $H01M\ 50/411$ (2021.01)
$H01M\ 50/414$ (2021.01)    $H01M\ 50/42$ (2021.01)
$H01M\ 50/434$ (2021.01)    $H01M\ 50/446$ (2021.01)
$H01M\ 50/449$ (2021.01)    $H01M\ 50/489$ (2021.01)

(52) Cooperative Patent Classification (CPC):
C08F 257/02; H01G 11/24; H01G 11/30;
H01G 11/52; H01M 4/13; H01M 4/62; H01M 50/411;
H01M 50/414; H01M 50/42; H01M 50/434;
H01M 50/443; H01M 50/446; H01M 50/449;
H01M 50/489; Y02E 60/10

(86) International application number:
**PCT/JP2023/008374**

(87) International publication number:
**WO 2023/189245 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 JP 2022061343**

(71) Applicant: **Zeon Corporation
Tokyo 100-8246 (JP)**

(72) Inventor: **OGIHARA, Tasuku
Tokyo 100-8246 (JP)**

(74) Representative: **Maiwald GmbH
Elisenhof
Elisenstraße 3
80335 München (DE)**

(54) **COMPOSITION FOR ELECTROCHEMICAL ELEMENT FUNCTIONAL LAYER, MULTILAYER BODY FOR ELECTROCHEMICAL ELEMENT, AND ELECTROCHEMICAL ELEMENT**

(57) Provided is a composition for an electrochemical device functional layer that is capable of forming a functional layer having excellent wet adhesiveness. The composition for an electrochemical device functional layer contains a particulate polymer, wherein the particulate polymer has a volume particle diameter D50 of not less than 1.0 μm and not more than 10.0 μm, and the particulate polymer has a particle size distribution α in which a proportion constituted by particles having a particle diameter of at least 1.5 times the volume particle diameter D50 is not less than 0.5 volume% and not more than 5 volume% when the particulate polymer is taken to be 100 volume%.

**EP 4 503 304 A1**

## Description

TECHNICAL FIELD

The present disclosure relates to a composition for an electrochemical device functional layer, a laminate for an electrochemical device, and an electrochemical device.

BACKGROUND

Electrochemical devices such as lithium ion secondary batteries and electric double-layer capacitors have characteristics such as compact size, light weight, high energy-density, and the ability to be repeatedly charged and discharged, and are used in a wide variety of applications.
A lithium ion secondary battery, for example, generally includes battery members such as a positive electrode, a negative electrode, and a separator that isolates the positive electrode and the negative electrode from each other and prevents short-circuiting between the positive and negative electrodes.
In an electrochemical device such as a lithium ion secondary battery, a constituent member that includes a functional layer such as an adhesive layer aimed at improving adhesiveness between constituent members may be used. Specifically, an electrode that has a functional layer further formed on an electrode substrate in which an electrode mixed material layer is provided on a current collector and a separator that has a functional layer formed on a separator substrate may be used as battery members. In recent years, further improvements of functional layers have been studied with the aim of further increasing the performance of electrochemical devices such as lithium ion secondary batteries. As one specific example, Patent Literature (PTL) 1 proposes compounding a particulate polymer having an average circularity of not less than 0.90 and less than 0.99 and a volume-average particle diameter of not less than 1.0 $\mu$m and not more than 10.0 $\mu$m in a composition for an electrochemical device functional layer in order to form a functional layer that can display excellent adhesiveness.

CITATION LIST

Patent Literature

PTL 1: WO2020/175292A1

SUMMARY

(Technical Problem)

However, in the case of a functional layer that is formed using the conventionally known particulate polymer described above, for example, there is room for further improvement in terms of adhesiveness after immersion in electrolyte solution (hereinafter, also referred to as "wet adhesiveness").
Accordingly, one object of the present disclosure is to provide a composition for an electrochemical device functional layer that is capable of forming a functional layer having excellent wet adhesiveness.
Another object of the present disclosure is to provide a laminate for an electrochemical device that includes a functional layer obtained using this composition for an electrochemical device functional layer and an electrochemical device that includes this laminate for an electrochemical device.

(Solution to Problem)

The inventor made extensive studies to achieve the foregoing objects. The inventor made a new discovery that the problem described above can be solved with a composition for an electrochemical device functional layer that contains a particulate polymer having a specific volume particle diameter D50 and a specific particle size distribution (hereinafter, also referred to as a "particle size distribution $\alpha$"), and, in this manner, completed the present disclosure.
Specifically, with the aim of advantageously solving the problem set forth above, a presently disclosed composition for an electrochemical device functional layer contains a particulate polymer, wherein the particulate polymer has a volume particle diameter D50 of not less than 1.0 $\mu$m and not more than 10.0 $\mu$m, and the particulate polymer has a particle size distribution $\alpha$ in which a proportion constituted by particles having a particle diameter of at least 1.5 times the volume particle diameter D50 is not less than 0.5 volume% and not more than 5.0 volume% when the particulate polymer is taken to be 100 volume%. A composition for an electrochemical device functional layer such as set forth above is capable of forming a functional layer having excellent wet adhesiveness.

The volume particle diameter D50 of the particulate polymer referred to in the present specification is the particle diameter at which, in a particle size distribution (by volume) obtained through measurement by a particle size analyzer, cumulative volume calculated from a small diameter end of the distribution reaches 50%. The volume particle diameter D50 of the particulate polymer can be measured according to a method described in the EXAMPLES section.

In the presently disclosed composition for an electrochemical device functional layer, it is preferable that the particulate polymer has an average circularity of not less than 0.95 and not more than 0.99 and that the particulate polymer has a circularity distribution in which a proportion constituted by particles having a circularity of less than 0.95 is less than 10%, by number, relative to the particulate polymer.

When the average circularity of the particulate polymer is not less than the lower limit set forth above, adhesion points between the particulate polymer and materials other than the particulate polymer increase in a functional layer formed using the composition for an electrochemical device functional layer, shedding of components forming the functional layer (also referred to as "dusting") is inhibited, and, as a result, wet adhesiveness can be improved. Moreover, adhesiveness before immersion in electrolyte solution (hereinafter, also referred to as "dry adhesiveness") can also be improved.

On the other hand, when the average circularity of the particulate polymer is not more than the upper limit set forth above, the state of the particulate polymer in a functional layer stabilizes, dusting is inhibited, and, as a result, wet adhesiveness and dry adhesiveness can be improved.

When the proportion constituted by particles having a circularity of less than 0.95 in the particulate polymer is less than the upper limit set forth above, adhesion points between the particulate polymer and materials other than the particulate polymer increase in a functional layer, dusting is inhibited, and, as a result, wet adhesiveness and dry adhesiveness can be improved.

The average circularity and circularity distribution of the particulate polymer referred to in the present specification can be measured by a method described in the EXAMPLES section of the present specification.

In the presently disclosed composition for an electrochemical device functional layer, an amount of elution of the particulate polymer into tetrahydrofuran (hereinafter, also referred to as "THF") is preferably not less than 5 mass% and not more than 50 mass%.

When the amount of elution of the particulate polymer into tetrahydrofuran is not less than the lower limit set forth above, the particulate polymer deforms to a suitable degree at a contact surface between a functional layer formed using the composition for an electrochemical device functional layer and an electrochemical device member in contact therewith, and, as a result, wet adhesiveness and dry adhesiveness can be improved.

On the other hand, when the amount of elution of the particulate polymer into tetrahydrofuran is not more than any of the upper limits set forth above, excessive deformation of the particulate polymer is inhibited, and, as a result, it is possible to inhibit sticking together (also referred to as blocking) of a functional layer and an electrochemical device member in a situation in which a laminate or electrochemical device including the functional layer is stored and transported in a wound up state, for example. In other words, blocking resistance of a functional layer can be improved. Moreover, in an electrochemical device, the amount of elution into electrolyte solution of components of the particulate polymer that can act as a cause of increased resistance can be reduced, and, as a result, cycle characteristics of the electrochemical device can be improved.

The "amount of elution into tetrahydrofuran" of the particulate polymer referred to in the present specification can be measured by a method described in the EXAMPLES section of the present specification.

In the presently disclosed composition for an electrochemical device functional layer, it is preferable that the particulate polymer is formed of particles containing a polymer that includes: an aromatic monovinyl monomer unit; and at least one type of cross-linkable monomer unit selected from the group consisting of an aromatic divinyl monomer unit, a di(meth)acrylic acid ester monomer unit, a tri(meth)acrylic acid ester monomer unit, and an epoxy group-containing ethylenically unsaturated monomer unit, and that proportional content of the cross-linkable monomer unit is not less than 0.1 mass% and not more than 5 mass% when all repeating units in the polymer are taken to be 100 mass%.

When the particulate polymer is formed of particles containing a polymer that includes an aromatic monovinyl monomer unit, wet adhesiveness and dry adhesiveness can be improved.

When the particulate polymer is formed of particles containing a polymer that includes the above-described cross-linkable monomer unit, wet adhesiveness can be improved. Moreover, excessive deformation of the particulate polymer is inhibited, and, as a result, blocking resistance of a functional layer can be improved. Furthermore, in an electrochemical device, the amount of elution into electrolyte solution of components of the particulate polymer that can act as a cause of increased resistance can be reduced, and, as a result, cycle characteristics of the electrochemical device can be improved.

When the proportional content of the cross-linkable monomer unit is not less than the lower limit set forth above, blocking resistance of a functional layer and cycle characteristics of an electrochemical device can be improved.

On the other hand, when the proportional content of the cross-linkable monomer unit is not more than the upper limit set forth above, the particulate polymer deforms to a suitable degree, and, as a result, wet adhesiveness and dry adhesiveness can be improved.

When a polymer is said to "include a monomer unit" in the present specification, this means that "a polymer obtained using that monomer includes a structural unit derived from the monomer". Moreover, the proportional contents of monomer units in a polymer can be measured by a nuclear magnetic resonance (NMR) method such as $^1$H-NMR.

In the present specification, "(meth)acryl" indicates "acryl" and/or "methacryl".

In the presently disclosed composition for an electrochemical device functional layer, proportional content of a polymerization initiator decomposition product in the particles forming the particulate polymer is preferably 20 ppm or less relative to total mass of the particles forming the particulate polymer.

When the proportional content of a polymerization initiator decomposition product in the particles is not more than the upper limit set forth above, blocking resistance of a functional layer can be improved. Moreover, in an electrochemical device, the amount of elution into electrolyte solution of a polymerization initiator decomposition product that can act as a cause of increased resistance can be reduced, and, as a result, cycle characteristics can be improved.

The "proportional content of a polymerization initiator decomposition product" referred to in the present specification can be measured using a chromatograph. Specifically, the proportional content can be measured by a method described in the EXAMPLES section of the present specification, for example.

The presently disclosed composition for an electrochemical device functional layer preferably further comprises a binder.

When the composition for an electrochemical device functional layer further contains a binder, dusting is inhibited, and wet adhesiveness and dry adhesiveness can be improved.

In the presently disclosed composition for an electrochemical device functional layer, the binder preferably includes a (meth)acrylic acid ester monomer unit and an acid group-containing monomer unit.

When the binder includes a (meth)acrylic acid ester monomer unit and an acid group-containing monomer unit, wet adhesiveness and dry adhesiveness can be further improved.

The presently disclosed composition for an electrochemical device functional layer preferably further comprises an amine compound.

When the composition for an electrochemical device functional layer further contains an amine compound, decay or the like of the composition for an electrochemical device functional layer can be inhibited, and preservation stability of the composition for an electrochemical device functional layer can be improved.

The presently disclosed composition for an electrochemical device functional layer preferably further comprises non-conductive heat-resistant particles.

When the composition for an electrochemical device functional layer further contains non-conductive heat-resistant particles, heat resistance of a functional layer can be improved.

Moreover, with the aim of advantageously solving the problem set forth above, a presently disclosed laminate for an electrochemical device comprises: a substrate; and a functional layer formed on the substrate, wherein the functional layer is obtained using the composition for an electrochemical device functional layer set forth above. With a laminate for an electrochemical device such as set forth above, it is possible to improve cycle characteristics of an electrochemical device including the laminate for an electrochemical device.

Furthermore, with the aim of advantageously solving the problem set forth above, a presently disclosed electrochemical device comprises the laminate for an electrochemical device set forth above. An electrochemical device such as set forth above can display excellent cycle characteristics.


(Advantageous Effect)


According to the present disclosure, it is possible to provide a composition for an electrochemical device functional layer that is capable of forming a functional layer having excellent wet adhesiveness.

Moreover, according to the present disclosure, it is possible to provide a laminate for an electrochemical device that includes a functional layer obtained using this composition for an electrochemical device functional layer and an electrochemical device that includes this laminate for an electrochemical device.


DETAILED DESCRIPTION


The following provides a detailed description of embodiments of the present disclosure.

The presently disclosed composition for an electrochemical device functional layer (hereinafter, also referred to simply as a "composition for a functional layer") can be used as a material in formation of a functional layer that is included in the presently disclosed laminate for an electrochemical device (hereinafter, also referred to simply as a "laminate"). Moreover, the presently disclosed laminate for an electrochemical device can be used to produce the presently disclosed electrochemical device.

(Composition for electrochemical device functional layer)

The presently disclosed composition for an electrochemical device functional layer contains a specific particulate polymer and can optionally further contain a binder, non-conductive heat-resistant particles, an amine compound, and other components. A composition for a functional layer such as set forth above is capable of forming a functional layer having excellent wet adhesiveness.

Note that the presently disclosed composition for a functional layer is normally a slurry composition having the particulate polymer dispersed in water serving as a dispersion medium.

<Particulate polymer>

The particulate polymer that is contained in the composition for a functional layer is a polymer that has a particulate form in the composition for a functional layer and that has a specific volume particle diameter D50 and a specific particle size distribution α as described in detail below. It should be noted that the particulate polymer may have a particulate form or may have any other form after members have been adhered via a functional layer formed using the composition for a functional layer. Moreover, the particulate polymer may be a crystalline macromolecule polymer, an amorphous macromolecule polymer, or a mixture thereof.

< <Volume particle diameter D50 of particulate polymer> >

The particulate polymer has a volume particle diameter D50 of not less than 1.0 μm and not more than 10.0 μm.

When the volume particle diameter D50 of the particulate polymer is not less than the lower limit set forth above, this makes it easier for the particulate polymer to protrude relative to materials other than the particulate polymer and to come into contact with an electrochemical device member at a thickness direction surface of a functional layer formed using the composition for a functional layer, and, as a result, the functional layer can display excellent wet adhesiveness and dry adhesiveness.

On the other hand, when the volume particle diameter D50 of the particulate polymer is not more than the upper limit set forth above, adhesion points between the particulate polymer and materials other than the particulate polymer increase in a functional layer formed using the composition for a functional layer, dusting is inhibited, and, as a result, the functional layer can display excellent wet adhesiveness and dry adhesiveness.

The volume particle diameter D50 of the particulate polymer is preferably 2.0 μm or more, more preferably 2.3 μm or more, and even more preferably 2.5 μm or more, and is preferably 9.0 μm or less, more preferably 7.0 μm or less, and even more preferably 6.0 μm or less.

Note that the volume particle diameter D50 of the particulate polymer can be adjusted through the type and amount of metal hydroxide used in production of the particulate polymer, the production method of the particulate polymer, and the production conditions of the particulate polymer. The metal hydroxide is described in detail further below.

< <Particle size distribution α of particulate polymer> >

The particulate polymer has a particle size distribution α in which the proportion constituted by particles having a particle diameter of at least 1.5 times the volume particle diameter D50 (hereinafter, also referred to as "large particles") is not less than 0.5 volume% and not more than 5.0 volume% when the particulate polymer is taken to be 100 volume%.

When the proportion constituted by large particles in the particulate polymer is not less than the lower limit set forth above, a functional layer can display excellent wet adhesiveness and dry adhesiveness. Although the reason for this is not certain, it is presumed to be that when the functional layer and an electrode member are adhered, coarse particles can suitably enter fine irregularities present at the surface of the electrode member.

On the other hand, when the proportion constituted by large particles in the particulate polymer is not more than the upper limit set forth above, a functional layer can display excellent wet adhesiveness and dry adhesiveness. Although the reason for this is not certain, it is presumed to be that when the functional layer and an electrode member are adhered, contact between particles having a particle diameter of less than 1.5 times the volume particle diameter D50 (hereinafter, also referred to as "small particles") and the electrode member can be maintained well without being impaired by large particles.

The proportion constituted by large particles in the particulate polymer is preferably 1.0 volume% or more, and more preferably 1.5 volume% or more, and is preferably 4.5 volume% or less, and more preferably 4.0 volume% or less.

Note that the proportion constituted by large particles in the particulate polymer can be adjusted through the type and amount of metal hydroxide used in production of the particulate polymer, the production method of the particulate polymer, and the production conditions of the particulate polymer.

The particulate polymer preferably has a particle size distribution α in which the proportion constituted by particles having a particle diameter of at least 3.0 times the volume particle diameter D50 (hereinafter, also referred to as "coarse particles") is 2.0 volume% or less when the particulate polymer is taken to be 100 volume%.

When the proportion constituted by coarse particles in the particulate polymer is not more than the upper limit set forth above, small particles in a functional layer sufficiently contribute to adhesion to an electrode member, and, as a result, wet adhesiveness and dry adhesiveness can be improved.

The proportion constituted by coarse particles in the particulate polymer is more preferably 1.8 volume% or less, even more preferably 1.5 volume% or less, and further preferably 1.0 volume% or less.

On the other hand, the proportion constituted by coarse particles in the particulate polymer is 0.15 volume% or more, for example, and may be 0.45 volume% or more.

Note that the proportion constituted by coarse particles in the particulate polymer can be adjusted through the type and amount of metal hydroxide used in production of the particulate polymer, the production method of the particulate polymer, and the production conditions of the particulate polymer.

<<Average circularity of particulate polymer> >

The particulate polymer preferably has an average circularity of 0.950 or more, preferably has an average circularity of 0.960 or more, preferably has an average circularity of 0.995 or less, and more preferably has an average circularity of 0.990 or less.

When the average circularity of the particulate polymer is not less than any of the lower limits set forth above, adhesion points between the particulate polymer and materials other than the particulate polymer increase in a functional layer formed using the composition for a functional layer, dusting is inhibited, and, as a result, wet adhesiveness and dry adhesiveness can be improved.

On the other hand, when the average circularity of the particulate polymer is not more than any of the upper limits set forth above, the state of the particulate polymer in a functional layer stabilizes, dusting is inhibited, and, as a result, wet adhesiveness and dry adhesiveness can be improved.

Note that the average circularity of the particulate polymer can be adjusted through the production method and production conditions of the particulate polymer.

<<Circularity distribution of particulate polymer>>

The particulate polymer preferably has a circularity distribution in which the proportion constituted by particles having a circularity of less than 0.95 is less than 10%, by number, relative to the particulate polymer.

When the proportion constituted by particles having a circularity of less than 0.95 in the particulate polymer is less than the upper limit set forth above, adhesion points between the particulate polymer and materials other than the particulate polymer increase in a functional layer, dusting is inhibited, and, as a result, wet adhesiveness and dry adhesiveness can be improved.

The proportion constituted by particles having a circularity of less than 0.95 in the particulate polymer is more preferably 8% or less, and even more preferably 5% or less.

On the other hand, the proportion constituted by particles having a circularity of less than 0.95 in the particulate polymer is 0.1% or more, for example, and may be 0.5% or more, or may be 2% or more.

Note that the proportion constituted by particles having a circularity of less than 0.95 in the particulate polymer can be adjusted through the production method and production conditions of the particulate polymer.

<<Glass-transition temperature of particulate polymer>>

The glass-transition temperature (Tg) of the particulate polymer is preferably 30°C or higher, more preferably 40°C or higher, and even more preferably 55°C or higher, and is preferably 110°C or lower, more preferably 90°C or lower, and even more preferably 70°C or lower.

When the glass-transition temperature of the particulate polymer is not lower than any of the lower limits set forth above, blocking resistance of a functional layer can be improved.

On the other hand, when the glass-transition temperature of the particulate polymer is not higher than any of the upper limits set forth above, good wet adhesiveness and dry adhesiveness of a functional layer can be obtained when members are pressed and adhered via the functional layer.

< <Amount of elution of particulate polymer into THF> >

The amount of elution of the particulate polymer into THF is preferably 5 mass% or more, more preferably 10 mass% or more, even more preferably 15 mass% or more, and further preferably 20 mass% or more, and is preferably 50 mass% or less, more preferably 40 mass% or less, even more preferably 30 mass% or less, and further preferably 25 mass% or less.

When the amount of elution of the particulate polymer into tetrahydrofuran is not less than any of the lower limits set forth above, the particulate polymer deforms to a suitable degree at a contact surface between a functional layer formed using the composition for a functional layer and another layer in contact therewith, and, as a result, wet adhesiveness and dry adhesiveness can be improved.

On the other hand, when the amount of elution of the particulate polymer into THF is not more than any of the upper limits set forth above, excessive deformation of the particulate polymer is inhibited, and, as a result, blocking resistance of a functional layer can be improved. Moreover, in an electrochemical device, the amount of elution into electrolyte solution of components of the particulate polymer that can act as a cause of increased resistance can be reduced, and, as a result, cycle characteristics of the electrochemical device can be improved.

Note that the amount of elution of the particulate polymer into THF can be adjusted through the chemical composition of particles forming the particulate polymer.

< <Chemical composition of polymer contained in particles forming particulate polymer> >

No specific limitations are placed on a polymer (hereinafter, also referred to as "polymer A") that is contained in particles forming the particulate polymer so long as at least the volume particle diameter D50 and the proportion of large particles of the particulate polymer are within any of the ranges set forth above. For example, a known polymer that can be used as a binder in formation of a functional layer can be used as the polymer A.

Examples of monomer units of the polymer A include an aromatic monovinyl monomer unit, a cross-linkable monomer unit, a (meth)acrylic acid ester monomer unit, an acid group-containing monomer unit, and a fluorine atom-containing monomer unit.

It is preferable that the polymer A includes an aromatic monovinyl monomer unit and a cross-linkable monomer unit. In other words, it is preferable that the particulate polymer is formed of particles containing a polymer A that includes an aromatic monovinyl monomer unit and a cross-linkable monomer unit.

When the particulate polymer is formed of particles containing a polymer A that includes an aromatic monovinyl monomer unit, wet adhesiveness and dry adhesiveness can be improved.

-Aromatic monovinyl monomer unit-

Examples of aromatic monovinyl monomers that can form an aromatic monovinyl monomer unit include, but are not specifically limited to, styrene, $\alpha$-methylstyrene, butoxystyrene, and vinylnaphthalene, of which, styrene is preferable.

Note that one of these aromatic monovinyl monomers may be used individually, or two or more of these aromatic monovinyl monomers may be used in combination in a freely selected ratio.

The proportional content of aromatic monovinyl monomer units in the polymer A when all repeating units in the polymer A are taken to be 100 mass% is preferably 30 mass% or more, and more preferably 60 mass% or more, and is preferably 95 mass% or less, more preferably 90 mass% or less, and even more preferably 85 mass% or less.

When the proportional content of aromatic monovinyl monomer units is not less than any of the lower limits set forth above, elasticity of the particulate polymer improves, strength of an obtained functional layer is ensured, and close adherence between the functional layer and a substrate can be increased.

On the other hand, when the proportional content of aromatic monovinyl monomer units is not more than any of the upper limits set forth above, flexibility of the particulate polymer increases, and film formability during drying of the composition for a functional layer improves. Consequently, close adherence between a functional layer and a substrate can be increased.

-Cross-linkable monomer unit-

Examples of monomers that can form a cross-linkable monomer unit include polyfunctional monomers including two or more groups displaying polymerization reactivity in the monomer. Examples of such polyfunctional monomers include (meth)acrylic acid allyl ester monomers such as allyl methacrylate; aromatic divinyl monomers such as divinylbenzene and divinylnaphthalene; di(meth)acrylic acid ester monomers such as diethylene glycol dimethacrylate, ethylene glycol dimethacrylate, diethylene glycol diacrylate, and 1,3-butylene glycol diacrylate; tri(meth)acrylic acid ester monomers such as trimethylolpropane trimethacrylate and trimethylolpropane triacrylate; and epoxy group-containing ethylenically unsaturated monomers such as allyl glycidyl ether and glycidyl methacrylate. Divinylbenzene is preferable as an aromatic divinyl monomer, ethylene glycol dimethacrylate is preferable as a di(meth)acrylic acid ester monomer, trimethylolpropane trimethacrylate is preferable as a tri(meth)acrylic acid ester monomer, and glycidyl methacrylate is preferable as an epoxy group-containing ethylenically unsaturated monomer.

Note that one of these cross-linkable monomers may be used individually, or two or more of these cross-linkable monomers may be used in combination in a freely selected ratio.

At least one type of cross-linkable monomer unit selected from the group consisting of an aromatic divinyl monomer unit, a di(meth)acrylic acid ester monomer unit, a tri(meth)acrylic acid ester monomer unit, and an epoxy group-containing ethylenically unsaturated monomer unit is preferable as a cross-linkable monomer unit. In other words, it is preferable that the particulate polymer is formed of particles containing a polymer A that includes at least one type of cross-linkable monomer unit selected from the group consisting of an aromatic divinyl monomer unit, a di(meth)acrylic acid ester monomer unit, a tri(meth)acrylic acid ester monomer unit, and an epoxy group-containing ethylenically unsaturated monomer unit.

When the particulate polymer is formed of particles containing a polymer A that includes any of the above-described cross-linkable monomer units, wet adhesiveness can be improved. Moreover, excessive deformation of the particulate polymer is inhibited, and, as a result, blocking resistance of a functional layer can be improved. Furthermore, in an electrochemical device, the amount of elution into electrolyte solution of components of the particulate polymer that can act as a cause of increased resistance can be reduced, and, as a result, cycle characteristics of the electrochemical device can be improved.

Moreover, at least one type of cross-linkable monomer unit selected from the group consisting of an aromatic divinyl monomer unit, a di(meth)acrylic acid ester monomer unit, and a tri(meth)acrylic acid ester monomer unit is more preferable as a cross-linkable monomer unit because this enables further improvement of blocking resistance of a functional layer and cycle characteristics of an electrochemical device.

Furthermore, either or both of an aromatic divinyl monomer unit and a di(meth)acrylic acid ester monomer unit are even more preferable as a cross-linkable monomer unit because this enables a good balance of wet adhesiveness and dry adhesiveness with a swelling property of a functional layer in electrolyte solution.

The proportional content of cross-linkable monomer units in the polymer A when all repeating units in the polymer A are taken to be 100 mass% is preferably 0.1 mass% or more, and more preferably 0.3 mass% or more, and is preferably 5 mass% or less, more preferably 2 mass% or less, and even more preferably 1 mass% or less.

When the proportional content of cross-linkable monomer units is not less than any of the lower limits set forth above, blocking resistance of a functional layer and cycle characteristics of an electrochemical device can be improved.

On the other hand, when the proportional content of cross-linkable monomer units is not more than any of the upper limits set forth above, the particulate polymer deforms to a suitable degree at a contact surface of a functional layer formed using the composition for a functional layer and an electrochemical device member in contact therewith, and, as a result, wet adhesiveness and dry adhesiveness can be improved.

-(Meth)acrylic acid ester monomer unit-

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, butyl acrylate (n-butyl acrylate, t-butyl acrylate, etc.), pentyl acrylate, hexyl acrylate, heptyl acrylate, octyl acrylate (2-ethylhexyl acrylate, etc.), nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, butyl methacrylate (n-butyl methacrylate, t-butyl methacrylate, etc.), pentyl methacrylate, hexyl methacrylate, heptyl methacrylate, octyl methacrylate (2-ethylhexyl methacrylate, etc.), nonyl methacrylate, decyl methacrylate, lauryl methacrylate, n-tetradecyl methacrylate, and stearyl methacrylate. Of these (meth)acrylic acid ester monomers, n-butyl acrylate, 2-ethylhexyl acrylate, and methyl methacrylate are preferable, and 2-ethylhexyl acrylate is more preferable.

Note that one of these (meth)acrylic acid ester monomers may be used individually, or two or more of these (meth) acrylic acid ester monomers may be used in combination in a freely selected ratio.

The proportional content of (meth)acrylic acid ester monomer units in the polymer A when all repeating units in the polymer A are taken to be 100 mass% is preferably 10 mass% or more, and more preferably 15 mass% or more, and is preferably 60 mass% or less, more preferably 40 mass% or less, and even more preferably 20 mass% or less.

When the proportional content of (meth)acrylic acid ester monomer units is not less than any of the lower limits set forth above, excessive lowering of the glass-transition temperature of the particulate polymer can be avoided, and blocking resistance of an obtained functional layer can be improved.

On the other hand, when the proportional content of (meth)acrylic acid ester monomer units is not more than any of the upper limits set forth above, good close adherence between a functional layer and a substrate can be obtained.

Note that the term "(meth)acrylic acid ester monomer" as used in the present specification is not inclusive of monomers previously listed as "cross-linkable monomers" and monomers subsequently listed as "acid group-containing monomers".

-Acid group-containing monomer unit-

Examples of acid group-containing monomers that can form an acid group-containing monomer unit include carboxy group-containing monomers, sulfo group-containing monomers, phosphate group-containing monomers, and hydroxy group-containing monomers.

Examples of carboxy group-containing monomers include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid.

Note that in the present specification, "(meth)allyl" indicates "allyl" and/or "methallyl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

Note that in the present specification, "(meth)acryloyl" indicates "acryloyl" and/or "methacryloyl".

Examples of hydroxy group-containing monomers include 2-hydroxyethyl acrylate, 2-hydroxypropyl acrylate, 2-hydroxyethyl methacrylate, and 2-hydroxypropyl methacrylate.

Note that one of these acid group-containing monomers may be used individually, or two or more of these acid group-containing monomers may be used in combination in a freely selected ratio.

The proportional content of acid group-containing monomer units in the polymer A when all repeating units in the polymer A are taken to be 100 mass% is preferably 0.05 mass% or more, more preferably 0.1 mass% or more, and even more preferably 0.15 mass% or more, and is preferably 2 mass% or less, more preferably 1 mass% or less, and even more preferably 0.5 mass% or less.

-Fluorine atom-containing monomer unit-

Examples of fluorine atom-containing monomers that can form a fluorine atom-containing monomer unit include, but are not specifically limited to, vinylidene fluoride, tetrafluoroethylene, hexafluoropropylene, chlorotrifluoroethylene, vinyl fluoride, and perfluoroalkyl vinyl ethers. Of these fluorine atom-containing monomers, vinylidene fluoride is preferable.

Note that one of these fluorine atom-containing monomers may be used individually, or two or more of these fluorine atom-containing monomers may be used in combination in a freely selected ratio.

In a case in which the polymer A includes a fluorine atom-containing monomer unit, the particulate polymer is preferably a fluorine atom-containing polymer obtained using vinylidene fluoride as a fluorine atom-containing monomer from a viewpoint that better adhesiveness of a functional layer can be ensured. In particular, the fluorine atom-containing polymer is preferably (i) a homopolymer of vinylidene fluoride, (ii) a copolymer of vinylidene fluoride and another fluorine atom-containing monomer that is copolymerizable with vinylidene fluoride, or (iii) a copolymer of vinylidene fluoride, another fluorine atom-containing monomer that is copolymerizable with vinylidene fluoride, and a monomer that is copolymerizable therewith. Of fluorine atom-containing polymers, polyvinylidene fluoride (PVdF), polytetrafluoroethylene (PTFE), a vinylidene fluoride-hexafluoropropylene copolymer (PVdF-HFP), polyvinyl fluoride, and a copolymer of tetrafluoroethylene and a perfluoroalkyl vinyl ether are preferable.

-Other monomer units-

The polymer A may include other monomer units besides an aromatic monovinyl monomer unit, a cross-linkable monomer unit, a (meth)acrylic acid ester monomer unit, an acid group-containing monomer unit, and a fluorine atom-containing monomer unit. No specific limitations are placed on other monomer units. For example, a nitrile group-containing monomer unit may be included as another monomer unit.

Examples of nitrile group-containing monomers that can form a nitrile group-containing monomer unit include $\alpha,\beta$-ethylenically unsaturated nitrile monomers. Specifically, any $\alpha,\beta$-ethylenically unsaturated compound that includes a nitrile group can be used as an $\alpha,\beta$-ethylenically unsaturated nitrile monomer without any specific limitations. Examples include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile.

Note that one of these nitrile group-containing monomers may be used individually, or two or more of these nitrile group-containing monomers may be used in combination in a freely selected ratio.

The proportional content of nitrile group-containing monomer units in the polymer A when all repeating units in the polymer A are taken to be 100 mass% is preferably 3 mass% or more, more preferably 4 mass% or more, and even more preferably 6 mass% or more, and is preferably 30 mass% or less, more preferably 27 mass% or less, and even more preferably 25 mass% or less.

When the proportional content of nitrile group-containing monomer units is not less than any of the lower limits set forth above, adhesive strength of the particulate polymer can be improved, and peel strength of a functional layer can be increased.

On the other hand, when the proportional content of nitrile group-containing monomer units is not more than any of the upper limits set forth above, flexibility of the particulate polymer can be increased.

The proportional content of other monomer units exclusive of nitrile group-containing monomer units in the polymer A when all repeating units in the polymer A are taken to be 100 mass% is preferably 0 mass% or more, and is preferably 10 mass% or less, more preferably 7 mass% or less, and even more preferably 5 mass% or less.

When the proportional content of other monomer units is not more than any of the upper limits set forth above, reduction of stability of the composition for a functional layer can be inhibited.

The proportional content of the particulate polymer in the composition for a functional layer is preferably 5 mass% or more, and more preferably 10 mass% or more relative to all components (inclusive of a dispersion medium) in the composition for a functional layer, and is preferably 50 mass% or less, and more preferably 40 mass% or less relative to all components in the composition for a functional layer.

When the proportional content of the particulate polymer in the composition for a functional layer is not less than any of the lower limits set forth above, wet adhesiveness and dry adhesiveness can be improved. On the other hand, when the proportional content of the particulate polymer in the composition for a functional layer is not more than any of the upper limits set forth above, storage stability of the composition for a functional layer can be improved.

In a case in which the composition for a functional layer contains a subsequently described binder and non-conductive heat-resistant particles, the proportional content of the particulate polymer in the composition for a functional layer is preferably not less than 1 mass% and not more than 12 mass% relative to the total amount (100 mass%) of the particulate polymer, the binder, and the non-conductive heat-resistant particles.

<<Production of particles containing polymer A>>

The particles containing the polymer A can be produced through polymerization of a monomer composition containing the monomers described above, carried out in an aqueous solvent such as water, for example. The proportion constituted by each monomer in the monomer composition is normally the same as the proportion constituted by each monomer unit in the polymer A.

The method of polymerization is not specifically limited and may be a method such as suspension polymerization, emulsion polymerization and aggregation, or pulverization, for example. In particular, suspension polymerization and emulsion polymerization and aggregation are preferable, and suspension polymerization is more preferable from a viewpoint of ease of adjustment of the volume particle diameter D50 and the particle size distribution $\alpha$ of the particulate polymer. The polymerization reaction may be radical polymerization, living radical polymerization, or the like.

-Other compounding agents-

Other compounding agents such as chain transfer agents, polymerization modifiers, polymerization reaction retardants, reactive fluidizers, fillers, flame retardants, antioxidants, and colorants can be compounded in any amount in the monomer composition that is used to produce the particles containing the polymer A.

The following describes, as one example, a production method for particles containing the polymer A by suspension polymerization.

-Production of particles containing polymer A by suspension polymerization-

(1) Production of monomer composition

First, monomers for forming the target polymer A and other compounding agents that are added as necessary are mixed so as to produce a monomer composition.

(2) Formation of droplets

Next, the monomer composition is dispersed in water, a polymerization initiator is added, and then droplets of the monomer composition are formed. The droplets can be formed by using a disperser such as an emulsifying/dispersing device to perform shear stirring of the water containing the monomer composition, for example.

In a situation in which a disperser is used in droplet formation, the rotation speed of the disperser is preferably more than 8,000 rpm, more preferably 9,500 rpm or more, and even more preferably 11,000 rpm or more, and is preferably less than 15,000 rpm, more preferably 14,000 rpm or less, and even more preferably 13,000 rpm or less. When the rotation speed of the disperser is within any of the ranges set forth above, the volume particle diameter D50 of the particulate polymer and proportions in the particle size distribution $\alpha$ of the particulate polymer can easily be adjusted.

In a situation in which a disperser is used in droplet formation, the stirring speed of the disperser is preferably 21 m/s or more, more preferably 25 m/s or more, and even more preferably 29 m/s or more, and is preferably 40 m/s or less, more preferably 37 m/s or less, and even more preferably 35 m/s or less.

When the stirring speed of the disperser is within any of the ranges set forth above, the volume particle diameter D50 of the particulate polymer and proportions in the particle size distribution $\alpha$ of the particulate polymer can easily be adjusted.

Note that the "stirring speed" referred to in the present specification is the circumferential speed of a circumference formed when dispersing teeth, an impeller, or the like rotates.

The polymerization initiator may be an oil-soluble polymerization initiator such as t-butyl peroxy-2-ethylhexanoate or azobisisobutyronitrile. The polymerization initiator may be added before droplet formation once the monomer composition has been dispersed in water or may be added to the monomer composition before dispersion thereof in water.

Note that in a situation in which particles containing the polymer A are produced by emulsion polymerization and aggregation, a water-soluble polymerization initiator such as potassium persulfate, for example, can be used as a polymerization initiator.

From a viewpoint of stabilizing droplets of the monomer composition that are formed in the water, it is preferable that a dispersion stabilizer is added to the water and that droplets of the monomer composition are then formed. The dispersion stabilizer may be sodium dodecylbenzenesulfonate, a metal hydroxide such as magnesium hydroxide, or the like, for example. The dispersion stabilizer may be added in the form of a colloidal dispersion liquid having the dispersion stabilizer dispersed in water, for example.

(3) Polymerization

Next, once droplets of the monomer composition have been formed, the water containing the formed droplets is heated to initiate polymerization and thereby form particles containing the polymer A in the water. The reaction temperature in the polymerization is preferably not lower than 50°C and not higher than 95°C. Moreover, the reaction time in the polymerization is preferably 1 hour or more, and is preferably 10 hours or less, more preferably 8 hours or less, and even more preferably 6 hours or less.

(4) Washing, filtration, dehydration, and drying step

Once the polymerization has ended, the particles containing the polymer A can be obtained by subjecting the water containing the particles that contain the polymer A to washing, filtration, and drying by standard methods.

< <Polymerization initiator decomposition product> >

The particles forming the particulate polymer can contain a decomposition product of the polymerization initiator that was used in polymerization of the polymer A (hereinafter, also referred to simply as a "polymerization initiator decomposition product"). Note that the polymerization initiator decomposition product is inclusive not only of a decomposition product that can be present straight after the polymerization reaction but also of a product present after post treatment such as decarboxylation treatment or denitrification treatment, for example.

In a case in which t-butyl peroxy-2-ethylhexanoate is used as the polymerization initiator, the polymerization initiator decomposition product may be heptyl t-butyl ether or the like, for example. Moreover, in a case in which azobisisobutyronitrile is used as the polymerization initiator, the polymerization initiator decomposition product may be tetramethylsuccinonitrile, 2-cyanopropane, or the like, for example. Furthermore, in a case in which potassium persulfate is used as the polymerization initiator, the polymerization initiator decomposition product may be sulfate ions (potassium sulfate) or the like, for example.

The proportional content of the polymerization initiator decomposition product in the particles forming the particulate polymer is preferably 20 ppm or less, more preferably 10 ppm or less, even more preferably 5 ppm or less, and particularly preferably 0 ppm relative to the total mass of the particles.

When the proportional content of the polymerization initiator decomposition product in the particles is not more than any of the upper limits set forth above, blocking resistance of a functional layer can be improved. Moreover, in an electrochemical device, the amount of elution into electrolyte solution of the polymerization initiator decomposition product, which can act as a cause of increased resistance, can be reduced, and, as a result, cycle characteristics can be improved.

Note that the proportional content of the polymerization initiator decomposition product in the particles can be adjusted through the purification method and the purification conditions in production of the particulate polymer, for example.

<Binder>

The presently disclosed composition for a functional layer preferably further contains a binder. When the composition for a functional layer further contains a binder, dusting is inhibited, and wet adhesiveness and dry adhesiveness can be improved.

Although the binder may have a particulate form or may have a nonparticulate form, it is preferable that the binder has a particulate form from a viewpoint of good inhibition of dusting. It should be noted that the binder may have a particulate form or may have any other form after members have been adhered via a functional layer formed using the composition for a functional layer.

<<Chemical composition of binder>>

The binder may be a known polymer that is water-insoluble and that can be dispersed in a dispersion medium such as water without any specific limitations. For example, the binder may be a binding resin such as a thermoplastic elastomer. The thermoplastic elastomer is preferably a conjugated diene polymer or an acrylic polymer (ACL).

Note that one of these binders may be used individually, or two or more of these binders may be used in combination in a freely selected ratio.

<<<Acrylic polymer>>>

The term "acrylic polymer" refers to a polymer that includes a (meth)acrylic acid ester monomer unit. The acrylic polymer may include a cross-linkable monomer unit, an acid group-containing monomer unit, and so forth such as previously described, for example, in addition to a (meth)acrylic acid ester monomer unit without any specific limitations. Moreover, it is preferable that the acrylic polymer includes a (meth)acrylic acid ester monomer unit and an acid group-containing monomer unit because this enables improvement of wet adhesiveness and dry adhesiveness.

Note that descriptions of a (meth)acrylic acid ester monomer unit, a cross-linkable monomer unit, and an acid group-containing monomer unit are omitted below since these monomer units have already been described above.

-Proportions of monomer units in acrylic polymer-

The proportion constituted by (meth)acrylic acid ester monomer units in the acrylic polymer when all repeating units in the polymer forming the binder are taken to be 100 mass% is preferably 50 mass% or more, more preferably 55 mass% or more, and even more preferably 58 mass% or more, and is preferably 98 mass% or less, more preferably 97 mass% or less, and even more preferably 96 mass% or less.

When the proportion constituted by (meth)acrylic acid ester monomer units is not less than any of the lower limits set forth above, wet adhesiveness and dry adhesiveness can be further improved.

On the other hand, when the proportion constituted by (meth)acrylic acid ester monomer units is not more than any of the upper limits set forth above, blocking resistance of a functional layer and cycle characteristics of an electrochemical device can be improved.

The proportion constituted by acid group-containing monomer units in the acrylic polymer when all repeating units in the polymer forming the binder are taken to be 100 mass% is preferably 0.1 mass% or more, more preferably 0.3 mass% or more, and even more preferably 0.5 mass% or more, and is preferably 20 mass% or less, more preferably 10 mass% or less, and even more preferably 5 mass% or less.

When the proportion constituted by acid group-containing monomer units is not less than any of the lower limits set forth above, dispersibility of the binder in the composition for a functional layer and in a functional layer can be increased, and wet adhesiveness and dry adhesiveness can be further improved.

On the other hand, when the proportion constituted by acid group-containing monomer units is not more than any of the upper limits set forth above, residual water content of a functional layer can be reduced, and blocking resistance of a functional layer and cycle characteristics of an electrochemical device can be improved.

The proportion constituted by cross-linkable monomer units in the acrylic polymer when all repeating units in the polymer forming the binder are taken to be 100 mass% is preferably 0.1 mass% or more, and more preferably 1.0 mass% or more, and is preferably 3.0 mass% or less, and more preferably 2.5 mass% or less.

When the proportion constituted by cross-linkable monomer units is not less than any of the lower limits set forth above, blocking resistance of a functional layer and cycle characteristics of an electrochemical device can be improved.

On the other hand, when the proportion constituted by cross-linkable monomer units is not more than any of the upper limits set forth above, wet adhesiveness and dry adhesiveness can be further improved.

-Other monomer units in acrylic polymer-

The acrylic polymer may include other monomer units. Examples of other monomers that can form other monomer units that can be included in the acrylic polymer include conjugated diene monomers such as 1,3-butadiene, 2-methyl-1,3-butadiene, 2,3-dimethyl-1,3-butadiene, and 2-chloro-1,3-butadiene; aromatic monovinyl monomers such as previously described; acrylonitrile and other nitrile group-containing monomers such as previously described; olefin monomers such as ethylene and propylene; halogen atom-containing monomers such as vinyl chloride and vinylidene chloride; vinyl ester monomers such as vinyl acetate, vinyl propionate, vinyl butyrate, and vinyl benzoate; vinyl ether monomers such as methyl vinyl ether, ethyl vinyl ether, and butyl vinyl ether; vinyl ketone monomers such as methyl vinyl ketone, ethyl vinyl ketone, butyl vinyl ketone, hexyl vinyl ketone, and isopropenyl vinyl ketone; and heterocycle-containing vinyl compound monomers such as N-vinylpyrrolidone, vinylpyridine, and vinylimidazole. Of these examples, acrylonitrile is preferable as another monomer.

Note that one of these other monomers may be used individually, or two or more of these other monomers may be used in combination in a freely selected ratio. Moreover, the proportional content of other monomer units in the acrylic polymer may be adjusted as appropriate.

The proportion constituted by other monomer units in the acrylic polymer when all repeating units in the polymer forming the binder are taken to be 100 mass% is preferably less than 30 mass%, more preferably less than 15 mass%, and even more preferably 10 mass% or less.

<<<Conjugated diene polymer>>>

The term "conjugated diene polymer" refers to a polymer that includes a conjugated diene monomer unit. Specific examples of conjugated diene polymers include, but are not specifically limited to, copolymers that include an aromatic monovinyl monomer unit and a conjugated diene monomer unit such as a styrene-butadiene copolymer (SBR), butadiene rubber (BR), acrylic rubber (NBR) (copolymer including an acrylonitrile unit and a butadiene unit), and hydrogenated products of the foregoing examples.

Note that descriptions of a conjugated diene monomer unit and an aromatic monovinyl monomer unit are omitted below since these monomer units have already been described above.

-Proportions of monomer units in conjugated diene polymer-

The proportion constituted by conjugated diene monomer units in the conjugated diene polymer when all repeating units in the polymer forming the binder are taken to be 100 mass% is preferably 15 mass% or more, and more preferably 30 mass% or more, and is preferably 80 mass% or less, more preferably 60 mass% or less, and even more preferably 40 mass% or less.

The proportion constituted by aromatic monovinyl monomer units in the conjugated diene polymer when all repeating units in the polymer forming the binder are taken to be 100 mass% is preferably 15 mass% or more, more preferably 35 mass% or more, and even more preferably 55 mass% or more, and is preferably 80 mass% or less, and more preferably 70 mass% or less.

-Other monomer units in conjugated diene polymer-

The conjugated diene polymer may include other monomer units. Examples of other monomers that can form other monomer units that can be included in the conjugated diene polymer include acid group-containing monomers such as previously described and nitrile group-containing monomers such as previously described.

Note that one of these other monomers may be used individually, or two or more of these other monomers may be used in combination in a freely selected ratio. Moreover, the proportional content of other monomer units in the conjugated diene polymer may be adjusted as appropriate.

<<Glass-transition temperature of binder>>

The glass-transition temperature (Tg) of the binder is preferably -100°C or higher, more preferably -90°C or higher, and even more preferably -80°C or higher, and is preferably lower than 30°C, more preferably 20°C or lower, and even more preferably 15°C or lower.

When the glass-transition temperature of the binder is not lower than any of the lower limits set forth above, wet adhesiveness and dry adhesiveness can be further improved. Moreover, blocking resistance of a functional layer can be improved.

On the other hand, when the glass-transition temperature of the binder is not higher than any of the upper limits set forth above, flexibility of a functional layer can be further increased.

< <Volume particle diameter D50 of binder> >

The volume particle diameter D50 of the binder is preferably 0.1 $\mu$m or more, and more preferably 0.2 $\mu$m or more, and is preferably 0.8 $\mu$m or less, and more preferably 0.5 $\mu$m or less.

When the volume particle diameter D50 of the binder is not less than any of the lower limits set forth above, reduction of ion conductivity in a functional layer can be further inhibited, and electrochemical characteristics (particularly output characteristics) of an electrochemical device can be improved.

On the other hand, when the volume particle diameter D50 of the binder is not more than any of the upper limits set forth above, wet adhesiveness and dry adhesiveness can be further improved.

Note that the volume particle diameter D50 of the binder referred to in the present specification is the particle diameter at which, in a particle size distribution (by volume) obtained through measurement by laser diffraction, cumulative volume calculated from a small diameter end of the distribution reaches 50%. The volume particle diameter D50 of the binder can be measured according to a method described in the EXAMPLES section.

< <Content of binder> >

The content of the binder in the composition for a functional layer is preferably 20 parts by mass or more, more preferably 40 parts by mass or more, and even more preferably 50 parts by mass or more per 100 parts by mass of the particulate polymer, and is preferably 80 parts by mass or less, more preferably 70 parts by mass or less, and even more preferably 60 parts by mass or less per 100 parts by mass of the particulate polymer.

When the content of the binder is not less than any of the lower limits set forth above, dusting is inhibited, and, as a result, wet adhesiveness and dry adhesiveness can be further improved.

On the other hand, when the content of the binder is not more than any of the upper limits set forth above, reduction of ion conductivity of a functional layer can be inhibited, and deterioration of output characteristics of an obtained electrochemical device can be inhibited.

In a case in which the composition for a functional layer contains non-conductive heat-resistant particles described further below, the content of the binder in the composition for a functional layer is preferably 0.1 parts by mass or more, more preferably 0.2 parts by mass or more, even more preferably 0.5 parts by mass or more, and further preferably 3 parts by mass or more per 100 parts by mass of the non-conductive heat-resistant particles, and is preferably 20 parts by mass or less, more preferably 15 parts by mass or less, and even more preferably 10 parts by mass or less per 100 parts by mass of the non-conductive heat-resistant particles.

When the content of the binder is not less than any of the lower limits set forth above, dusting is inhibited, and, as a result, wet adhesiveness and dry adhesiveness can be further improved.

On the other hand, when the content of the binder is not more than any of the upper limits set forth above, reduction of ion conductivity of a functional layer can be inhibited, and deterioration of output characteristics of an obtained electrochemical device can be inhibited.

Note that the binder can be produced through polymerization of a monomer composition containing the above-described monomers, carried out in an aqueous solvent such as water, for example, but is not specifically limited to being produced in this manner. The proportion constituted by each monomer in the monomer composition is normally the same as the proportion constituted by each monomer unit in the binder.

Moreover, the polymerization method and the polymerization reaction are not specifically limited and can, for example, be any of the polymerization methods and polymerization reactions that were given as examples for the polymerization method of the previously described particulate polymer.

<Non-conductive heat-resistant particles>

The presently disclosed composition for a functional layer preferably further contains non-conductive heat-resistant particles (hereinafter, also referred to as "heat-resistant particles"). When the composition for a functional layer further contains heat-resistant particles, heat resistance of a functional layer can be improved.

The term "non-conductive heat-resistant particles" as used in the present specification refers to fine particles that have a heat-resistance temperature of 200°C or higher and that are not electrically conductive. Moreover, the term "heat-resistance temperature" refers to a temperature at which substantial physical change such as thermal deformation does not occur.

Although no specific limitations are placed on the heat-resistant particles so long as they are fine particles that have a heat-resistance temperature of 200°C or higher, are electrochemically stable, and are electrically insulating, the heat-resistant particles are preferably inorganic particles.

Since inorganic particles have a comparatively large specific gravity, this makes it easier for the particulate polymer to protrude relative to the inorganic particles at a thickness direction surface of a functional layer in a situation in which a functional layer is formed through application of a composition for a functional layer containing inorganic particles onto a substrate, for example, and, as a result, enables improvement of wet adhesiveness and dry adhesiveness.

The material of the inorganic particles is preferably an electrochemically stable material that is stably present in the environment of use of an electrochemical device. For example, the inorganic particles may be particles of an oxide such as aluminum oxide (alumina), hydrous aluminum oxide (boehmite (AlOOH)), gibbsite (Al(OH)$_3$), silicon oxide, magnesium oxide (magnesia), magnesium hydroxide, calcium oxide, titanium oxide (titania), barium titanate (BaTiOs), zirconium oxide (ZrO), or alumina-silica complex oxide; particles of a nitride such as aluminum nitride or boron nitride; particles of covalently bonded crystals such as silicon or diamond; particles of sparingly soluble ionic crystals such as barium sulfate, calcium fluoride, or barium fluoride; or fine particles of clay such as talc or montmorillonite. Of these examples, aluminum oxide, hydrous aluminum oxide (boehmite), magnesium hydroxide, and barium sulfate are more preferable, and aluminum oxide is even more preferable. These particles may be subjected to element substitution, surface treatment, solid solution treatment, or the like as necessary.

Note that one of these types of inorganic particles may be used individually, or two or more of these types of inorganic particles may be used in combination in a freely selected ratio.

<<Volume particle diameter D50 of heat-resistant particles>>

The volume particle diameter D50 of the heat-resistant particles is preferably 0.1 $\mu$m or more, more preferably 0.2 $\mu$m or more, and even more preferably 0.25 $\mu$m or more, and is preferably 1.5 $\mu$m or less, more preferably 1.0 $\mu$m or less, and even more preferably 0.8 $\mu$m or less.

When the volume particle diameter D50 of the heat-resistant particles is not less than any of the lower limits set forth above, the heat-resistant particles densely pack into a functional layer. Consequently, reduction of ion conductivity of the functional layer can be further inhibited, and electrochemical characteristics (particularly output characteristics) of an electrochemical device can be improved.

On the other hand, when the volume particle diameter D50 of the heat-resistant particles is not more than any of the upper limits set forth above, it is possible to cause a functional layer to display excellent heat resistance even with a thin functional layer, and thus the capacity of an electrochemical device can be increased.

The volume particle diameter D50 of the heat-resistant particles referred to in the present specification is the particle diameter at which, in a particle size distribution (by volume) obtained through measurement by laser diffraction, cumulative volume calculated from a small diameter end of the distribution reaches 50%. The volume particle diameter D50 of the heat-resistant particles can be measured according to a method described in the EXAMPLES section.

<<Ratio of particulate polymer relative to heat-resistant particles>>

A volume ratio of the particulate polymer relative to the heat-resistant particles (volume of particulate polymer/volume of heat-resistant particles) in the composition for a functional layer is preferably 5/95 or more, preferably 20/80 or more, even more preferably 25/75 or more, and further preferably 30/70 or more, and is preferably 45/55 or less, more preferably 40/60 or less, and even more preferably 35/65 or less.

When the volume ratio of the particulate polymer relative to the heat-resistant particles is within any of the ranges set forth above, a better balance of heat resistance and adhesiveness of a functional layer is obtained.

A mass ratio of the particulate polymer relative to the heat-resistant particles (mass of particulate polymer/mass of heat-resistant particles) in the composition for a functional layer is preferably 1/99 or more, more preferably 6/94 or more, and even more preferably 9/91 or more, and is preferably 51/49 or less, more preferably 42/58 or less, and even more preferably 36/64 or less.

When the mass ratio of the particulate polymer relative to the heat-resistant particles is within any of the ranges set forth above, a better balance of heat resistance and adhesiveness of a functional layer is obtained.

<Amine compound>

The presently disclosed composition for a functional layer preferably further contains an amine compound. When the composition for a functional layer further contains an amine compound, decay or the like of the composition for a functional layer can be inhibited, and preservation stability of the composition for a functional layer can be improved.

The amine compound is not specifically limited and may be hydroxylamine sulfate, diethylhydroxylamine, dimethylhydroxylamine, dipropylhydroxylamine, isopropylhydroxylamine, an isothiazoline compound, or the like, for example. Of these amine compounds, an isothiazoline compound is preferable because this enables further improvement of preservation stability of the composition for a functional layer. Note that the isothiazoline compound may be 1,2-benzo-4-isothiazolin-3-one, 2-methyl-4-isothiazolin-3-one, or the like, for example.

One of these amine compounds may be used individually, or two or more of these amine compounds may be used in combination in a freely selected ratio.

The content of the amine compound is preferably 0.3 parts by mass or more, and more preferably 0.5 parts by mass or more per 100 parts by mass of the particulate polymer, and is preferably 2 parts by mass or less, and more preferably 1 part by mass or less per 100 parts by mass of the particulate polymer.

<Other components>

The composition for a functional layer may contain any other components besides the particulate polymer, the binder, the non-conductive heat-resistant particles, and the amine compound. No specific limitations are placed on other components so long as they do not affect electrochemical reactions in an electrochemical device. For example, known additives such as dispersants, viscosity modifiers, and wetting agents may be used as other components. One of these other components may be used individually, or two or more of these other components may be used in combination.

<Production method of composition for electrochemical device functional layer>

No specific limitations are placed on the method by which the composition for a functional layer is produced. For example, the composition for a functional layer can be produced by mixing the above-described particulate polymer, water serving as a dispersion medium, and the binder, heat-resistant particles, amine compound, and other components that are used as necessary. Note that in a case in which the particulate polymer or binder is produced through polymerization of a monomer composition in an aqueous solvent, the particulate polymer or binder may be mixed with other components while still in the form of a water dispersion. Moreover, in a case in which the particulate polymer or binder is mixed in the form of a water dispersion, water in that water dispersion may be used as the dispersion medium.

Although no specific limitations are placed on the mixing method of these components, the mixing is preferably performed using a disperser as a mixing device in order to efficiently disperse the components. The disperser is preferably a device that can uniformly disperse and mix the components. Examples of dispersers that can be used include a ball mill, a sand mill, a pigment disperser, a grinding machine, an ultrasonic disperser, a homogenizer, and a planetary mixer.

(Laminate for electrochemical device)

The presently disclosed laminate for an electrochemical device includes a substrate and a functional layer formed on the substrate, wherein the functional layer is obtained using the presently disclosed composition for a functional layer. Since the presently disclosed composition for a functional layer is capable of forming a functional layer having excellent wet adhesiveness, a laminate that includes a functional layer obtained using the presently disclosed composition for a functional layer can improve cycle characteristics of an electrochemical device including the laminate.

<Substrate>

No specific limitations are placed on the substrate. For example, the substrate may be a separator substrate in a case in which the functional layer is used as a member that constitutes part of a separator and may be an electrode substrate obtained by forming an electrode mixed material layer on a current collector in a case in which the functional layer is used as a member that constitutes part of an electrode. No specific limitations are placed on how the laminate obtained by forming the functional layer on the substrate using the composition for a functional layer is used. For example, the functional layer may be formed on a separator substrate or the like, and then the resultant laminate may be used in that form as an electrochemical device member such as a separator, or the functional layer may be formed on an electrode substrate, and then the resultant laminate may be used in that form as an electrode.

<<Separator substrate>>

The separator substrate on which the functional layer is formed is not specifically limited and can be any of those described in JP2012-204303A, for example. Of these separator substrates, a microporous membrane made of polyolefinic (for example, polyethylene, polypropylene, polybutene, or polyvinyl chloride) resin is preferred because such a membrane can reduce the total thickness of a separator, which increases the ratio of electrode active material in an electrochemical device, and thereby increases the volumetric capacity of the electrochemical device. Note that the separator substrate may include any layer other than the functional layer that can display an expected function in part thereof.

<<Electrode substrate>>

The electrode substrate (positive electrode substrate or negative electrode substrate) on which the functional layer is formed is not specifically limited and may be an electrode substrate that is obtained by forming an electrode mixed material layer on a current collector. The current collector, components in the electrode mixed material layer (for example, an electrode active material (positive electrode active material or negative electrode active material) and a binder for an electrode mixed material layer (binder for a positive electrode mixed material layer or binder for a negative electrode mixed material layer)), and the method by which the electrode mixed material layer is formed on the current collector can be known examples thereof such as any of those described in JP2013-145763A, for example. Note that the electrode substrate may include any layer other than the functional layer that can display an expected function in part thereof.

<Functional layer>

The functional layer can be formed on the above-described substrate using the presently disclosed composition for a functional layer. The functional layer contains at least the previously described particulate polymer and contains the binder, heat-resistant particles, amine compound, and other components that are used as necessary. Note that components contained in the functional layer are components that were contained in the composition for a functional layer and that the preferred ratio of each component is the same as the preferred ratio of the component in the composition for a functional layer.

<< formation method of functional layer>>

Examples of methods by which the functional layer may be formed on the substrate using the composition for a functional layer include, but are not specifically limited to:

(1) a method in which the composition for a functional layer is applied onto the surface of the above-described substrate and is then dried;
(2) a method in which the above-described substrate is immersed in the composition for a functional layer and is then dried; and
(3) a method in which the composition for a functional layer is applied onto a releasable substrate and is dried to form a functional layer that is then transferred onto the surface of the above-described substrate.

Note that a functional layer may be formed on just one side of the substrate, or functional layers may be formed on both sides of the substrate.
A known releasable substrate can be used as the releasable substrate without any specific limitations.
Of these methods, method (1) is preferable due to ease of controlling the thickness of the functional layer. Moreover, method (1) may, for example, include a step of applying the composition for a functional layer onto the substrate (application step) and a step of drying the composition for a functional layer that has been applied onto the substrate to form a functional layer (functional layer formation step).

-Application step-

Examples of methods by which the composition for a functional layer can be applied onto the substrate in the application step include, but are not specifically limited to, doctor blading, reverse roll coating, direct roll coating, gravure coating, extrusion coating, and brush coating.

-Functional layer formation step-

The composition for a functional layer on the substrate can be dried by any commonly known method in the functional layer formation step without any specific limitations. For example, the drying method may be drying by warm, hot, or low-humidity air; drying in a vacuum; or drying by irradiation with infrared light, electron beams, or the like. Although no specific limitations are placed on the drying conditions, the drying temperature is preferably not lower than 50°C and not higher than 150°C, and the drying time is preferably not less than 1 minute and not more than 30 minutes.
The functional layer that is formed on the substrate can suitably be used as a single layer with which a function of a heat-resistant layer that increases heat resistance of the substrate and a function of an adhesive layer that strongly adheres members to each other are simultaneously expressed.

Moreover, the substrate including the functional layer formed using the composition for a functional layer as described above (i.e., the presently disclosed laminate) has high producibility because production with reduced man-hours and time is possible as compared to a conventional substrate that includes a heat-resistant layer and an adhesive layer.

In the case of a functional layer that is formed using a composition for a functional layer containing heat-resistant particles, a plurality of heat-resistant particles are normally stacked on one another in a thickness direction of the functional layer. The thickness of a layer (hereinafter, also referred to as a "heat-resistant particle layer") resulting from stacking of the heat-resistant particles in the thickness direction of the functional layer is preferably 0.5 $\mu$m or more, more preferably 0.8 $\mu$m or more, and even more preferably 1 $\mu$m or more, and is preferably 6 $\mu$m or less, more preferably 5 $\mu$m or less, and even more preferably 4 $\mu$m or less.

When the thickness of the heat-resistant particle layer is not less than any of the lower limits set forth above, the functional layer has extremely good heat resistance.

On the other hand, when the thickness of the heat-resistant particle layer is not more than any of the upper limits set forth above, ion diffusivity of the functional layer can be ensured, and electrochemical characteristics (particularly output characteristics) of an electrochemical device can be more sufficiently enhanced.

Note that the "thickness of the heat-resistant particle layer" referred to in the present specification can be measured by a method described in the EXAMPLES section of the present specification.

<<Ratio of volume particle diameter D50 of particulate polymer relative to thickness of heat-resistant particle layer>>

A ratio of the volume particle diameter D50 of the particulate polymer relative to the thickness of the heat-resistant particle layer (volume particle diameter D50 of particulate polymer/thickness of heat-resistant particle layer) is preferably 1.05 or more, more preferably 1.2 or more, and even more preferably 1.5 or more, and is preferably 5.0 or less, more preferably 4.5 or less, and even more preferably 4.0 or less.

When the ratio of the volume particle diameter D50 of the particulate polymer relative to the thickness of the heat-resistant particle layer is not less than any of the lower limits set forth above, this makes it even easier for the particulate polymer to protrude relative to the surface of the heat-resistant particles at a thickness direction surface of the functional layer, and thus even better wet adhesiveness and dry adhesiveness can be displayed.

On the other hand, when the ratio of the volume particle diameter D50 of the particulate polymer relative to the thickness of the heat-resistant particle layer is not more than any of the upper limits set forth above, shedding of the particulate polymer during application of the composition for a functional layer onto the substrate can be further inhibited, and an even more uniform functional layer can be formed.

< <Thickness of functional layer> >

The thickness of the functional layer that is formed on the substrate (hereinafter, also referred to as the "maximum thickness of the functional layer") is preferably 1.0 $\mu$m or more, more preferably 1.5 $\mu$m or more, even more preferably 2.0 $\mu$m or more, particularly preferably 2.5 $\mu$m or more, and most preferably 5.0 $\mu$m or more, and is preferably 10.0 $\mu$m or less, more preferably 9.0 $\mu$m or less, and even more preferably 8.0 $\mu$m or less.

When the maximum thickness of the functional layer is not less than any of the lower limits set forth above, the functional layer has extremely good heat resistance.

On the other hand, when the maximum thickness of the functional layer is not more than any of the upper limits set forth above, ion diffusivity of the functional layer can be ensured, and electrochemical characteristics (particularly output characteristics) of an electrochemical device can be more sufficiently enhanced.

Note that the "maximum thickness of the functional layer" referred to in the present specification can be measured using a field emission scanning electron microscope (FE-SEM), for example.

(Electrochemical device)

The presently disclosed electrochemical device includes the presently disclosed laminate. An electrochemical device such as set forth above can display excellent cycle characteristics.

Note that the presently disclosed electrochemical device should include at least the presently disclosed laminate and thus may also include constituent elements other than the presently disclosed laminate so long as the effects according to the presently disclosure are not noticeably lost.

The presently disclosed electrochemical device may be, but is not specifically limited to, a lithium ion secondary battery or an electric double-layer capacitor, and is preferably a lithium ion secondary battery.

The following describes a lithium ion secondary battery as one example of the presently disclosed electrochemical device. A lithium ion secondary battery according to the present disclosure includes the presently disclosed laminate set forth above. More specifically, the lithium ion secondary battery includes a positive electrode, a negative electrode, a functional layer-equipped separator (presently disclosed laminate) in which a functional layer is formed on a separator substrate, and an electrolyte solution. A functional layer may be formed on just one side of the separator substrate, or functional layers may be formed on both sides of the separator substrate.

Note that although the functional layer is formed on the separator substrate in the following example, the functional layer may be formed on an electrode substrate.

In the lithium ion secondary battery according to the present disclosure, the functional layer enables strong adhesion between the positive electrode and the separator substrate and/or between the negative electrode and the separator substrate in the electrolyte solution. Consequently, widening of the distance between electrode plates of the electrodes in accompaniment to repeated charging and discharging is inhibited, and good battery characteristics such as cycle characteristics are obtained. This lithium ion secondary battery also has improved separator substrate heat resistance through the functional layer. Furthermore, this lithium ion secondary battery requires less time for separator production and can be produced with high productivity as compared to a case in which a conventional separator including a heat-resistant layer and an adhesive layer is used.

Known positive electrodes, negative electrodes, and electrolyte solutions that are used in lithium ion secondary batteries can be used as the previously mentioned positive electrode, negative electrode, and electrolyte solution.

<Positive electrode and negative electrode>

Specifically, the electrodes (positive electrode and negative electrode) can each be an electrode that is obtained by forming an electrode mixed material layer on a current collector. The current collector may be made of a metal material such as iron, copper, aluminum, nickel, stainless steel, titanium, tantalum, gold, or platinum. Of these metal materials, the current collector for the negative electrode is preferably made of copper. Moreover, the current collector for the positive electrode is preferably made of aluminum. The electrode mixed material layer can be a layer that contains an electrode active material and a binder.

<Functional layer-equipped separator (laminate)>

The functional layer-equipped separator can be produced by, for example, forming a functional layer on a separator substrate using the method of forming a functional layer that was described above.

The separator substrate is not specifically limited and can be any of those described in JP2012-204303A, for example. Of these separator substrates, a microporous membrane made of polyolefinic resin (polyethylene, polypropylene, polybutene, or polyvinyl chloride) is preferred since such a membrane can reduce the total thickness of the functional layer-equipped separator, which increases the ratio of electrode active material in the lithium ion secondary battery, and thereby increases the volumetric capacity of the lithium ion secondary battery.

<Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), methyl ethyl carbonate (ethyl methyl carbonate (EMC)), and vinylene carbonate; esters such as $\gamma$-butyrolactone and methyl formate; ethers such as 1,2-dimethoxyethane and tetrahydrofuran; and sulfur-containing compounds such as sulfolane and dimethyl sulfoxide.

Furthermore, a mixture of any of these organic solvents may be used. Of these organic solvents, carbonates are preferable due to having high permittivity and a wide stable potential region. In general, lithium ion conductivity tends to increase when an organic solvent having a low viscosity is used. Therefore, lithium ion conductivity can be adjusted through the type of organic solvent that is used.

The concentration of the electrolyte in the electrolyte solution can be adjusted as appropriate. Furthermore, known additives may be added to the electrolyte solution.

<Production method of lithium ion secondary battery>

The lithium ion secondary battery that is an example of the presently disclosed electrochemical device can be produced by, for example, stacking the above-described positive electrode and negative electrode with the functional layer-equipped separator (presently disclosed laminate) in-between, performing rolling, folding, or the like of the resultant stack, as necessary, to place the stack in a battery container, injecting the electrolyte solution into the battery container, and sealing the battery container. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may be a coin type, a button type, a sheet type, a cylinder type, a prismatic type, a flat type, or the like, for example.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted in the polymer by a structural unit formed through polymerization of a given monomer is normally, unless otherwise specified, the same as the ratio (charging ratio) of the given monomer among all monomers used in polymerization for forming the polymer.

In the examples and comparative examples, methods described below were used for measurement of glass-transition temperature, volume particle diameter D50 of a particulate polymer, proportions in a particle size distribution $\alpha$ of a particulate polymer, volume particle diameter D50 of a binder, volume particle diameter D50 of heat-resistant particles, average circularity and circularity distribution of a particulate polymer, amount of elution of a particulate polymer into THF, content of a polymerization initiator decomposition product in particles, thickness of a heat-resistant particle layer, and volume ratio of a particulate polymer relative to heat-resistant particles. Moreover, methods described below were used for measurement and evaluation of wet adhesiveness, dry adhesiveness, blocking resistance of a functional layer, and cycle characteristics of a secondary battery.

<Glass-transition temperature>

Particulate polymers and binders produced in the examples and comparative examples were each taken as a measurement sample. The measurement sample was weighed into an aluminum pan in an amount of 10 mg and was measured by a differential scanning calorimeter (EXSTAR DSC6220 produced by SII NanoTechnology Inc.) under conditions prescribed in JIS Z8703 with a measurement temperature range of -100°C to 500°C and a heating rate of 10°C/min to obtain a differential scanning calorimetry (DSC) curve. Note that an empty aluminum pan was used as a reference. On the obtained differential scanning calorimetry (DSC) curve, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C).

<Volume particle diameter D50 and particle size distribution $\alpha$ of particulate polymer>

A particulate polymer produced in each example or comparative example was used as a measurement sample. The measurement sample was weighed out in an amount equivalent to 0.1 g, was taken into a beaker, and 0.1 mL of alkylbenzenesulfonic acid aqueous solution (DRIWEL produced by FUJIFILM Corporation) as a dispersant was added thereto. In addition, 10 mL to 30 mL of a diluent (ISOTON II produced by Beckman Coulter, Inc.) was added into the beaker, and 3 minutes of dispersing was performed by an ultrasonic disperser 20 W (Watt). Thereafter, a particle size analyzer (Multisizer produced by Beckman Coulter, Inc.) was used to perform measurement under conditions of an aperture diameter of 20 $\mu$m, a medium of ISOTON II, and a measured particle count of 100,000. In the particle size distribution (by volume) of the particulate polymer obtained through this measurement, the particle diameter D50 at which cumulative volume calculated from a small diameter end of the distribution reached 50% was taken to be the volume particle diameter D50 of the particulate polymer.

Moreover, the value of the volume particle diameter D50 was used to calculate the value of "volume particle diameter D50 $\times$ 1.5", and the proportion constituted by particles having a particle diameter of not less than the value of "volume particle diameter D50 $\times$ 1.5" (proportion of large particles) when the particulate polymer was taken to be 100 volume% was determined.

Furthermore, the value of the volume particle diameter D50 was used to calculate the value of "volume particle diameter D50 × 3.0", and the proportion constituted by particles having a particle diameter of not less than the value of "volume particle diameter D50 × 3.0" (proportion of coarse particles) when the particulate polymer was taken to be 100 volume% was determined.

<Volume particle diameter D50 of binder>

The volume particle diameter D50 of a binder produced in each example was measured by laser diffraction. Specifically, a water dispersion of the produced binder (adjusted to a solid content concentration of 0.1 mass%) was used as a sample. The sample was measured using a laser diffraction particle size analyzer (LS-230 produced by Beckman Coulter, Inc.). In the particle size distribution (by volume) of the binder obtained through this measurement, the particle diameter D50 at which cumulative volume calculated from a small diameter end of the distribution reached 50% was taken to be the volume particle diameter D50 of the binder.

<Volume particle diameter D50 of heat-resistant particles>

The volume particle diameter D50 of heat-resistant particles used in each example or comparative example was measured by laser diffraction.
Specifically, in a particle size distribution (by volume) of the heat-resistant particles obtained through measurement by laser diffraction, the particle diameter (D50) at which cumulative volume calculated from a small diameter end of the distribution reached 50% was taken to be the volume particle diameter D50 of the heat-resistant particles.

<Average circularity and circularity distribution of particulate polymer>

A particulate polymer produced in each example or comparative example was used as a measurement sample. A vessel was charged with 10 mL of deionized water in advance, and then 0.02 g of a surfactant (alkylbenzenesulfonic acid) as a dispersant was added thereto, 0.02 g of the measurement sample was further added, and 3 minutes of dispersing treatment was performed at 60 W (Watt) using an ultrasonic disperser. A flow particle image analyzer (FPIA-3000 produced by Sysmex) was used to measure 1,000 to 10,000 particles of the measurement sample having a circle-equivalent diameter of 0.4 $\mu$m or more with the concentration of the measurement sample during measurement adjusted such as to be 3,000 particles/$\mu$L to 10,000 particles/$\mu$L. Note that the circularity is expressed by the following formula (I) and that the average circularity is a value obtained by taking the average thereof.

Circularity = Perimeter of circle of equal area to projected area of particulate polymer/Perimeter of projected image of particulate polymer (I)

Moreover, the proportion by number constituted by particles having a circularity of less than 0.95 relative to the particulate polymer was determined.

<Amount of elution of particulate polymer into THF>

A water dispersion of a particulate polymer produced in each example or comparative example was subjected to separation by filtration using quantitative filter paper No. 5B (produced by Advantec Co., Ltd.). The obtained solid content was loaded into a vessel of a dryer and was dried at 40°C for 48 hours to obtain a dried particulate polymer. Approximately 0.2 g of the obtained powder was pressed at 200°C and 5 MPa for 2 minutes to obtain a film. Thereafter, the dried film was cut to 3 mm to 5 mm-square, and approximately 1 g thereof was precisely weighed. The mass of the film piece obtained by this cutting was taken to be w0. The film piece was immersed in 50 g of 25°C tetrahydrofuran (THF) for 24 hours. Thereafter, the film piece was pulled out from the THF, was vacuum dried at a temperature of 105°C for 3 hours, and the mass w1 of insoluble content was measured. The amount of elution was calculated using the following calculation formula.

$$\text{Amount of elution (mass\%)} = (1 - \text{w1/w0}) \times 100$$

<Content of polymerization initiator decomposition product in particles>

A water dispersion of a particulate polymer produced in each example or comparative example was subjected to separation by filtration using quantitative filter paper No. 5B (produced by Advantec Co., Ltd.). The obtained solid content was loaded into a vessel of a dryer and was dried at 40°C for 48 hours to obtain a dried particulate polymer. Approximately 1.0 g of the obtained powder was mixed with 5 g of acetone and was then left at rest at room temperature (25°C) for 15 hours so as to extract a polymerization initiator decomposition product into acetone. Thereafter, the acetone containing the polymerization initiator decomposition product was filtered using a 0.45 $\mu$m PTFE filter. A microsyringe was used to accurately measure out 1 $\mu$L of the filtrate, and then measurement was performed using the gas chromatograph indicated below so as to determine the proportional content of the polymerization initiator decomposition product in particles forming the particulate polymer relative to the total mass of the particles. Note that since t-butyl peroxy-2-ethylhexanoate was used as a polymerization initiator for suspension polymerization in the examples and comparative examples, the polymerization initiator decomposition product was heptyl t-butyl ether.

[Gas chromatograph]

- Instrument: 8860 produced by Agilent Technologies, Inc.
- Column: DB-1 0.25 mm $\times$ 30 m produced by Agilent Technologies, Inc.
- Analysis conditions: Injector 250°C, detector 300°C
- Heating program: Hold at 50°C for 5 minutes after sample injection, subsequently heat to 280°C at 10°C/min, and then hold at 280°C for 10 minutes

In Example 6, the proportional content of a polymerization initiator decomposition product was determined by the following method.

Specifically, a water dispersion of a particulate polymer produced in Example 6 was subjected to separation by filtration using quantitative filter paper No. 5B (produced by Advantec Co., Ltd.). The obtained solid content was loaded into a vessel of a dryer and was dried at 40°C for 48 hours to obtain a dried particulate polymer. Approximately 1.0 g of the obtained powder was mixed with 5 g of water and was then left at rest at room temperature (25°C) for 15 hours so as to extract a polymerization initiator decomposition product into water. Thereafter, the water containing the polymerization initiator decomposition product was filtered using a 0.45 $\mu$m PTFE filter. The obtained solution (water) was measured using an ion chromatograph (produced by Thermo Fisher Scientific; product name: Integrion RFIC) to determine the proportional content of the polymerization initiator decomposition product in particles forming the particulate polymer relative to the total mass of the particles. Note that since potassium persulfate was used as a polymerization initiator for emulsion polymerization and aggregation in Example 6, the polymerization initiator decomposition product was sulfate ions.

<Thickness of heat-resistant particle layer>

The thickness of a heat-resistant particle layer was calculated from an image obtained by observing a cross-section of a functional layer-equipped separator (laminate) using a field emission scanning electron microscope (FE-SEM). Note that the thickness of the heat-resistant particle layer was taken to be the distance in a perpendicular direction from the surface of the separator at a side where the functional layer was formed to a heat-resistant particle forming a surface of the functional layer.

<Volume ratio of particulate polymer relative to heat-resistant particles>

A volume ratio of a particulate polymer relative to heat-resistant particles (volume of particulate polymer/volume of heat-resistant particles) was determined from the charged amounts of the heat-resistant particles and the particulate polymer in production of a slurry composition (composition for a functional layer). Note that the density of alumina was taken to be 4 g/cm$^3$, the density of boehmite was taken to be 3.1 g/cm$^3$, the density of magnesium hydroxide was taken to be 2.4 g/cm$^3$, and the density of barium sulfate was taken to be 4.5 g/cm$^3$ in this calculation.

<Adhesiveness after immersion in electrolyte solution (wet adhesiveness)>

A positive electrode and a functional layer-equipped separator (including functional layers at both sides) produced in each example or comparative example were each cut to 50 mm in length and 10 mm in width. The cut positive electrode and separator were then overlapped and stacked. The resultant laminate was pressed at a pressing rate of 30 m/min by roll pressing with a temperature of 25°C and a load of 10 kN/m to obtain a test specimen. This test specimen was then immersed in electrolyte solution having a temperature of 60°C for 72 hours. The electrolyte solution was a solution containing LiPF$_6$ as a supporting electrolyte with a concentration of 1 M in a mixed solvent of ethylene carbonate (EC) and diethyl carbonate (DEC) (volume mixing ratio: EC/DEC = 1/2). After this immersion, the test specimen was removed from the electrolyte solution, and electrolyte solution on the surface of the test specimen was wiped off. The test specimen was pressed once again under conditions of 3 minutes at 1 MPa and 80°C. The re-pressed test specimen was placed with the surface at the current collector-side of the positive electrode facing downward, and cellophane tape (tape prescribed by JIS Z1522) was affixed to the surface of the positive electrode. Note that the cellophane tape was fixed to a horizontal test stage in advance. The stress when the separator was peeled off by pulling one end of the separator vertically upward at a pulling speed of 50 mm/min was measured. A total of three measurements were made in this manner. Separately to the above, a laminate of a negative electrode and a separator was obtained and this laminate was pressed to obtain a test specimen in the same manner as described above. Moreover, in the same manner as when the positive electrode was used, a re-pressed test specimen was obtained, and the stress after immersion in electrolyte solution was measured a total of three times.

An average value of the stress measured a total of six times using the positive electrode and the negative electrode was determined as the peel strength (N/m) and was evaluated by the following standard as the adhesiveness (wet adhesiveness) between an electrode and a separator via a functional layer after immersion in electrolyte solution. A larger peel strength indicates better wet adhesiveness.

    A: Peel strength of 5.0 N/m or more
    B: Peel strength of not less than 3.0 N/m and less than 5.0 N/m
    C: Peel strength of not less than 1.0 N/m and less than 3.0 N/m
    D: Peel strength of less than 1.0 N/m

<Adhesiveness before immersion in electrolyte solution (dry adhesiveness)>

A negative electrode and a functional layer-equipped separator (including functional layers at both sides) produced in each example or comparative example were each cut out as 10 mm in width and 50 mm in length. The negative electrode and the separator were stacked and were pressed by a flat-plate press with a temperature of 70°C and a load of 0.5 kN for 10 seconds to obtain a test specimen. This test specimen was placed with the surface at the current collector-side of the negative electrode facing downward, and cellophane tape was affixed to the surface of the electrode. Tape prescribed by JIS Z1522 was used as the cellophane tape. Moreover, the cellophane tape was fixed to a horizontal test stage in advance. The stress when the separator was peeled off by pulling one end of the separator vertically upward at a pulling speed of 50 mm/min was measured. The stress was measured three times in total. An average value of the three obtained stress values was determined as the peel strength (N/m) and was evaluated by the following standard as the adhesiveness (dry adhesiveness) between an electrode and a separator via a functional layer. A larger peel strength indicates better dry adhesiveness.

    A: Peel strength of 5.0 N/m or more
    B: Peel strength of not less than 3.0 N/m and less than 5.0 N/m
    C: Peel strength of not less than 1.0 N/m and less than 3.0 N/m
    D: Peel strength of less than 1.0 N/m

<Blocking resistance of functional layer>

Two pieces of 4 cm in width by 4 cm in length were cut out as test specimens from a functional layer-equipped separator (including functional layers at both sides) produced in each example or comparative example. The two obtained test specimens were overlapped with the functional layer-sides thereof facing each other, and were pressed with a temperature of 40°C and a load of 8 kN for 2 minutes to obtain a pressed product. One end of the obtained pressed product was fixed in place, the other end of the pressed product was pulled vertically upward with a pulling speed of 50 mm/min, and stress during peeling was measured. The determined stress was taken to be the blocking strength. The blocking strength was evaluated by the following standard. A smaller blocking strength indicates better inhibition of blocking by the functional layer (i.e., higher functional layer blocking resistance).

    A: Blocking strength of less than 4 N/m
    B: Blocking strength of not less than 4 N/m and less than 6 N/m
    C: Blocking strength of not less than 6 N/m and less than 8 N/m
    D: Blocking strength of 8 N/m or more

<Cycle characteristics of secondary battery>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, CC-CV charging (upper limit cell voltage 4.20 V) was performed by a 0.2C constant-current method and CC discharging was performed to 3.00 V by a 0.2C constant-current method. This charging and discharging at 0.2C was repeated three times.

Thereafter, the lithium ion secondary battery was subjected to 200 cycles of a charge/discharge operation with a cell voltage of 4.20 V to 3.00 V and a charge/discharge rate of 1.0C in an environment having a temperature of 25°C. The discharge capacity of the 1st cycle was defined as X1 and the discharge capacity of the 200th cycle was defined as X2.

The discharge capacity X1 and the discharge capacity X2 were used to calculate a capacity maintenance rate $\Delta C'$ ($\Delta C' = (X2/X1) \times 100(\%)$), which was then evaluated by the following standard. A larger value for the capacity maintenance rate $\Delta C'$ indicates that the secondary battery has better cycle characteristics.

A: Capacity maintenance rate $\Delta C'$ of 93% or more
B: Capacity maintenance rate $\Delta C'$ of not less than 90% and less than 93%
C: Capacity maintenance rate $\Delta C'$ of not less than 87% and less than 90%
D: Capacity maintenance rate $\Delta C'$ of less than 87%

(Example 1)

<Production of particulate polymer (A)>

[Production of monomer composition (A)]

A monomer composition (A) was produced by mixing 81.5 parts of styrene as an aromatic monovinyl monomer, 18 parts of 2-ethylhexyl acrylate as a (meth)acrylic acid ester monomer, and 0.5 parts of ethylene glycol dimethacrylate as a cross-linkable monomer.

[Production of metal hydroxide]

A colloidal dispersion liquid (A) containing magnesium hydroxide as a metal hydroxide was produced by gradually adding an aqueous solution (A2) of 7.0 parts of sodium hydroxide dissolved in 50 parts of deionized water to an aqueous solution (A1) of 10.0 parts of magnesium chloride dissolved in 200 parts of deionized water under stirring.

[Suspension polymerization]

A particulate polymer (A) was produced by suspension polymerization. Specifically, the monomer composition (A) obtained as described above was added to the colloidal dispersion liquid (A) containing magnesium hydroxide, was further stirred therewith, and then 3.0 parts of t-butyl peroxy-2-ethylhexanoate (PERBUTYL O produced by NOF Corporation) was added as a polymerization initiator to yield a mixture. The obtained mixture was subjected to 1 minute of high-shear stirring at a rotation speed of 12,000 rpm using an inline emulsifying/dispersing device (CAVITRON produced by Pacific Machinery & Engineering Co., Ltd.) so as to form droplets of the monomer composition (A) in the colloidal dispersion liquid containing magnesium hydroxide.

The magnesium hydroxide-containing colloidal dispersion liquid in which droplets of the monomer composition (A) had been formed was loaded into a reactor, the temperature was raised to 90°C, and a polymerization reaction was performed for 5 hours. The resultant dispersion liquid was subjected to 2 hours of treatment under reduced pressure at 90°C using an evaporator to perform purification and yield a water dispersion containing a particulate polymer (A).

The water dispersion containing the particulate polymer (A) was used to measure the volume particle diameter D50 and the particle size distribution $\alpha$ of the particulate polymer (A). The results are shown in Table 1.

In addition, the water dispersion containing the particulate polymer (A) was stirred while sulfuric acid was added dropwise at room temperature (25°C) so as to perform acid washing until the pH reached 6.5 or lower. Next, separation was performed by filtration, a slurry was reformed through addition of 500 parts of deionized water to the resultant solid content, and water washing treatment (washing, filtration, and dehydration) was repeated 10 times. Thereafter, separation was performed by filtration to obtain solid content that was then loaded into a vessel of a dryer and was dried at 40°C for 48 hours to obtain a dried particulate polymer (A).

The glass-transition temperature and the average circularity and circularity distribution of the obtained particulate polymer (A) were measured. The results are shown in Table 1.

<Production of water dispersion containing binder ($\alpha$)>

A reactor including a stirrer was supplied with 70 parts of deionized water, 0.15 parts of sodium lauryl sulfate (EMAL® 2F (EMAL is a registered trademark in Japan, other countries, or both) produced by Kao Corporation) as an emulsifier, and 0.5 parts of ammonium persulfate as a polymerization initiator. The gas phase was purged with nitrogen gas, and the temperature was raised to 60°C.

Meanwhile, a monomer composition ($\alpha$) was produced in a separate vessel by mixing 50 parts of deionized water, 0.5 parts of sodium dodecylbenzenesulfonate as a dispersion stabilizer, 94 parts of n-butyl acrylate as a (meth)acrylic acid ester monomer, 2 parts of methacrylic acid as an acid group-containing monomer, 2 parts of acrylonitrile as a nitrile group-containing monomer, and 1 part of allyl methacrylate and 1 part of allyl glycidyl ether as cross-linkable monomers.

The obtained monomer composition ($\alpha$) was continuously added into the above-described reactor including a stirrer over 4 hours to perform polymerization. The reaction was carried out at 60°C during the addition. Once the addition was complete, a further 3 hours of stirring was performed at 70°C, and then the reaction was ended to yield a water dispersion containing a particulate binder ($\alpha$) as an acrylic polymer. The obtained particulate binder ($\alpha$) had a volume particle diameter D50 of 0.4 $\mu$m and a glass-transition temperature of -40°C.

<Production of slurry composition (composition for functional layer)>

A pre-mixing slurry was obtained by adding 0.5 parts of polyacrylic acid as a dispersant to 100 parts of alumina (AKP3000 produced by Sumitomo Chemical Co., Ltd.; volume particle diameter D50: 0.7 $\mu$m) as heat-resistant particles, further adding deionized water to adjust the solid content concentration to 55%, mixing these materials using a ball mill, and then further adding 6 parts in terms of solid content of the water dispersion containing the binder ($\alpha$).

A mixture was also obtained by mixing 0.2 parts of sodium dodecylbenzenesulfonate (NEOPELEX G-15 produced by Kao Corporation) as an emulsifier and 1.5 parts of carboxymethyl cellulose as a thickener with 100 parts of the particulate polymer such that the solid content concentration was 40% and then further adding 0.5 parts of 1,2-benzo-4-isothiazolin-3-one as an amine compound. This mixture was added to the pre-mixing slurry obtained as described above. Deionized water was further added to adjust the solid content concentration to 40% and yield a slurry composition (composition for a functional layer). The volume ratio of the particulate polymer (A) relative to the heat-resistant particles (volume of particulate polymer (A)/volume of heat-resistant particles) in the slurry composition was 30/70. Also note that the mass ratio of the particulate polymer (A) relative to the heat-resistant particles (mass of particulate polymer (A)/mass of heat-resistant particles) in the slurry composition was 30/280.

The obtained slurry composition was used to measure the content of a polymerization initiator decomposition product in particles and the amount of elution of the particulate polymer into THF. The results are shown in Table 1.

<Production of functional layer-equipped separator (laminate)>

A microporous membrane made of polyethylene (thickness: 12 $\mu$m) was prepared as a separator substrate. The slurry composition obtained as described above was applied onto one side of the separator substrate by bar coating. Next, the separator substrate with the slurry composition applied thereon was dried at 50°C for 1 minute to form a functional layer. The same operations were performed with respect to the other side of the separator substrate to produce a functional layer-equipped separator (laminate) that included functional layers of 2.0 $\mu$m each in thickness at both sides of the separator substrate.

<Production of positive electrode>

A slurry composition for a positive electrode was produced by mixing 100 parts of $LiCoO_2$ (volume-average particle diameter: 12 $\mu$m) as a positive electrode active material, 2 parts of acetylene black (HS-100 produced by Denka Company Limited) as a conductive material, 2 parts in terms of solid content of polyvinylidene fluoride (#7208 produced by Kureha Corporation) as a binder for a positive electrode mixed material layer, and N-methylpyrrolidone as a solvent, adjusting the total solid content concentration to 70%, and mixing these materials in a planetary mixer.

The slurry composition for a positive electrode was applied onto aluminum foil of 20 $\mu$m in thickness serving as a current collector by a comma coater such as to have a thickness after drying of approximately 150 $\mu$m. The applied slurry composition was dried by conveying the aluminum foil inside a 60°C oven for 2 minutes at a speed of 0.5 m/min. Thereafter, 2 minutes of heat treatment was performed at 120°C to obtain a pre-pressing positive electrode web. The pre-pressing positive electrode web was rolled by roll pressing to obtain a post-pressing positive electrode including a positive electrode mixed material layer (thickness: 60 $\mu$m).

<Production of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the reaction to yield a mixture containing a binder (SBR) for a negative electrode mixed material layer. The mixture containing the binder for a negative electrode mixed material layer was adjusted to pH 8 through addition of 5% sodium hydroxide aqueous solution and was subsequently subjected to thermal-vacuum distillation to remove unreacted monomer. Thereafter, the mixture was cooled to 30°C or lower to yield a water dispersion containing the target binder for a negative electrode mixed material layer.

After compounding 80 parts of artificial graphite (volume-average particle diameter: 15.6 $\mu$m) as a negative electrode active material (1) and 16 parts of a silicon-based active material $SiO_x$ (volume-average particle diameter: 4.9 $\mu$m) as a negative electrode active material (2), and mixing 2.5 parts in terms of solid content of a 2% aqueous solution of carboxymethyl cellulose sodium salt (MAC350HC produced by Nippon Paper Industries Co., Ltd.) as a viscosity modifier and deionized water therewith so as to adjust the solid content concentration to 68%, these materials were mixed at 25°C for 60 minutes. The solid content concentration was further adjusted to 62% with deionized water, and then a further 15 minutes of mixing was performed at 25°C to obtain a mixture. Deionized water and 1.5 parts in terms of solid content of the water dispersion containing the binder for a negative electrode mixed material layer were added to this mixture, the final solid content concentration was adjusted to 52%, and a further 10 minutes of mixing was performed to yield a mixture. This mixture was subjected to defoaming under reduced pressure to yield a slurry composition for a negative electrode having good fluidity.

The slurry composition for a negative electrode was applied onto copper foil of 20 $\mu$m in thickness serving as a current collector by a comma coater such as to have a thickness after drying of approximately 150 $\mu$m. The applied slurry composition was dried by conveying the copper foil inside a 60°C oven for 2 minutes at a speed of 0.5 m/min. Thereafter, 2 minutes of heat treatment was performed at 120°C to obtain a pre-pressing negative electrode web. The pre-pressing negative electrode web was rolled by roll pressing to obtain a post-pressing negative electrode including a negative electrode mixed material layer (thickness: 80 $\mu$m).

The functional layer-equipped separator, positive electrode, and negative electrode obtained as described above were used to evaluate wet adhesiveness, dry adhesiveness, and blocking resistance of a functional layer. The results are shown in Table 1.

<Production of lithium ion secondary battery>

The post-pressing positive electrode produced as described above was cut out as a rectangle of 49 cm $\times$ 5 cm and was placed with the surface at the positive electrode mixed material layer-side facing upward. The functional layer-equipped separator was cut out as 120 cm $\times$ 5.5 cm and was arranged on the positive electrode mixed material layer such that the positive electrode was positioned at one longitudinal direction side of the functional layer-equipped separator. In addition, the post-pressing negative electrode produced as described above was cut out as a rectangle of 50 cm $\times$ 5.2 cm and was arranged on the functional layer-equipped separator such that the surface at the negative electrode mixed material layer-side thereof was facing toward the functional layer-equipped separator and such that the negative electrode was positioned at the other longitudinal direction side of the functional layer-equipped separator. The resultant product was wound up using a winding machine to obtain a roll. This roll was pressed at 70°C and 1 MPa to obtain a flattened roll, was subsequently enclosed in an aluminum packing case serving as a battery case, and then electrolyte solution (solvent: ethylene carbonate/diethyl carbonate/vinylene carbonate (volume ratio) = 68.5/30/1.5; electrolyte: $LiPF_6$ of 1 M in concentration) was injected such that no air remained. An opening of the aluminum packing case was closed by heat sealing at a temperature of 150°C to produce a wound lithium ion secondary battery having a capacity of 800 mAh.

The obtained lithium ion secondary battery was used to evaluate cycle characteristics of the secondary battery. The result is shown in Table 1.

(Example 2)

Various operations, measurements, and evaluations were performed in the same way as in Example 1 with the exception that a particulate polymer (B) produced as described below was used instead of the particulate polymer (A) in production of the slurry composition. The results are shown in Table 1.

<Production of particulate polymer (B)>

Operations were performed in the same way as in Example 1 to produce a particulate polymer (B) with the exception that a colloidal dispersion liquid (B) containing magnesium hydroxide was used instead of the colloidal dispersion liquid (A) containing magnesium hydroxide as a metal hydroxide in production of the particulate polymer.
Note that the colloidal dispersion liquid (B) containing magnesium hydroxide was produced by gradually adding an aqueous solution (B2) of 8.4 parts of sodium hydroxide dissolved in 50 parts of deionized water to an aqueous solution (B1) of 12.0 parts of magnesium chloride dissolved in 200 parts of deionized water under stirring.

(Example 3)

Various operations, measurements, and evaluations were performed in the same way as in Example 1 with the exception that a particulate polymer (C) produced as described below was used instead of the particulate polymer (A) in production of the slurry composition. The results are shown in Table 1.

<Production of particulate polymer (C)>

Operations were performed in the same way as in Example 1 to produce a particulate polymer (C) with the exception that a colloidal dispersion liquid (C) containing magnesium hydroxide was used instead of the colloidal dispersion liquid (A) containing magnesium hydroxide as a metal hydroxide in production of the particulate polymer.
Note that the colloidal dispersion liquid (C) containing magnesium hydroxide was produced by gradually adding an aqueous solution (C2) of 5.6 parts of sodium hydroxide dissolved in 50 parts of deionized water to an aqueous solution (C1) of 8.0 parts of magnesium chloride dissolved in 200 parts of deionized water under stirring.

(Example 4)

Various operations, measurements, and evaluations were performed in the same way as in Example 1 with the exception that a particulate polymer (D) produced as described below was used instead of the particulate polymer (A) in production of the slurry composition. The results are shown in Table 1.

<Production of particulate polymer (D)>

Operations were performed in the same way as in Example 1 to produce a particulate polymer (D) with the exception that the rotation speed of the disperser was changed from 12,000 rpm to 13,500 rpm in production of the particulate polymer.

(Example 5)

Various operations, measurements, and evaluations were performed in the same way as in Example 1 with the exception that a particulate polymer (E) produced as described below was used instead of the particulate polymer (A) in production of the slurry composition. The results are shown in Table 1.

<Production of particulate polymer (E)>

Operations were performed in the same way as in Example 1 to produce a particulate polymer (E) with the exception that the rotation speed of the disperser was changed from 12,000 rpm to 10,000 rpm in production of the particulate polymer.

(Example 6)

Various operations, measurements, and evaluations were performed in the same way as in Example 1 with the exception that a particulate polymer (F) produced as described below by emulsion polymerization and aggregation was used instead of the particulate polymer (A) in production of the slurry composition. The results are shown in Table 1.

## EP 4 503 304 A1

<Production of particulate polymer (F)>

(1) Production of resin fine particles

A monomer composition (F) was produced by mixing 81.5 parts of styrene as an aromatic monovinyl monomer, 18 parts of 2-ethylhexyl acrylate as a (meth)acrylic acid ester monomer, and 0.5 parts of ethylene glycol dimethacrylate as a cross-linkable monomer in a flask.

Meanwhile, 0.7 parts of sodium dodecylbenzenesulfonate as an anionic surfactant was dissolved in 373 parts of deionized water inside a separable flask to produce a surfactant solution.

The monomer composition (F) obtained as described above was added to the surfactant solution and was dispersed using an emulsifying/dispersing device (CLEARMIX produced by M Technique Co., Ltd.) to produce an emulsified dispersion liquid of the monomer composition (F).

After adding 400 parts of deionized water to the emulsified dispersion liquid that had been obtained, an aqueous solution containing 2.1 parts of potassium persulfate as a polymerization initiator (aqueous solution of 2.1 parts of potassium persulfate dissolved in 39.6 parts of deionized water) and 1.9 parts of n-octyl mercaptan as a molecular weight modifier were added, and 3 hours of polymerization (first stage of polymerization) was performed at 80°C.

In addition, an aqueous solution containing 3.2 parts of potassium persulfate as a polymerization initiator (aqueous solution of 3.2 parts of potassium persulfate dissolved in 61.3 parts of deionized water) was added, and then 81.1 parts of styrene as an aromatic monovinyl monomer, 12.0 parts of methacrylic acid and 36.8 parts of n-butyl acrylate as (meth)acrylic acid ester monomer, and 2.1 parts of n-octyl mercaptan as a molecular weight modifier were added dropwise. After this dropwise addition, the temperature (80°C) was maintained for 2 hours to perform polymerization (second stage of polymerization).

After polymerization, the reaction liquid was water cooled to yield a dispersion liquid containing resin fine particles.

(2) Production of resin particles

A flask was charged with 150 parts in terms of solid content of the dispersion liquid containing the resin fine particles obtained as described above and 645 parts of deionized water. Stirring was performed to obtain a dispersion liquid, the temperature of the dispersion liquid was adjusted to 30°C, and then sodium hydroxide aqueous solution (concentration: 5 mol/L) was added until the dispersion liquid had a pH of 10.

Next, an aqueous solution of 32 parts of magnesium chloride hexahydrate dissolved in 32 parts of deionized water was added to the dispersion liquid over 10 minutes at 30°C under stirring. The dispersion liquid was subsequently heated to 90°C over 60 minutes. Stirring and heating were continued while causing aggregation through salting-out and fusion through heating of the resin fine particles so as to form resin particles.

Moreover, stirring and heating were continued while measuring the particle diameter of the resin particles using a particle size analyzer (Multisizer produced by Beckman Coulter, Inc.), and at the point at which the volume particle diameter D50 of the formed resin particles reached 3 $\mu$m, an aqueous solution of 8.8 parts of sodium chloride dissolved in 57.7 parts of deionized water was added to end the salting-out and fusion. Heating and stirring were continued at 90°C for 3 hours, and particle shape control was performed to yield a dispersion liquid containing a particulate polymer (F1).

Separately to the above, stirring and heating were continued while measuring the particle diameter of resin particles using a particle size analyzer by the same procedure as described above, and at the point at which the volume particle diameter D50 of the formed resin particles reached 5 $\mu$m, an aqueous solution of 8.8 parts of sodium chloride dissolved in 57.7 parts of deionized water was added to end the salting-out and fusion. Heating and stirring were continued at 90°C for 3 hours, and particle shape control was performed to yield a dispersion liquid containing a particulate polymer (F2).

The dispersion liquids containing the particulate polymers (F1) and (F2) that were obtained as described above were compounded in appropriate amounts so as to obtain a dispersion liquid containing a particulate polymer (F) having a target volume particle diameter D50 and particle size distribution $\alpha$.

The dispersion liquid containing the particulate polymer (F) was dehydrated, was subjected to water washing treatment 10 times using deionized water, and was dried at a pressure of 30 torr and a temperature of 50°C for 1 day using a vacuum dryer to obtain the particulate polymer (F).

(Example 7)

Various operations, measurements, and evaluations were performed in the same way as in Example 1 with the exception that a particulate polymer (G) produced as described below was used instead of the particulate polymer (A) in production of the slurry composition. The results are shown in Table 1.

<Production of particulate polymer (G)>

Operations were performed in the same way as in Example 1 to produce a particulate polymer (G) with the exception that the amount of styrene as an aromatic monovinyl monomer was changed from 81.5 parts to 81.8 parts and the amount of ethylene glycol dimethacrylate as a cross-linkable monomer was changed from 0.5 parts to 0.2 parts in production of the particulate polymer.

(Example 8)

Various operations, measurements, and evaluations were performed in the same way as in Example 1 with the exception that a particulate polymer (H) produced as described below was used instead of the particulate polymer (A) in production of the slurry composition. The results are shown in Table 1.

<Production of particulate polymer (H)>

Operations were performed in the same way as in Example 1 to produce a particulate polymer (H) with the exception that the amount of styrene as an aromatic monovinyl monomer was changed from 81.5 parts to 77 parts and the amount of ethylene glycol dimethacrylate as a cross-linkable monomer was changed from 0.5 parts to 5 parts in production of the particulate polymer.

(Example 9)

Various operations, measurements, and evaluations were performed in the same way as in Example 1 with the exception that a particulate polymer (I) produced as described below was used instead of the particulate polymer (A) in production of the slurry composition. The results are shown in Table 1.

<Production of particulate polymer (I)>

Operations were performed in the same way as in Example 1 to produce a particulate polymer (I) with the exception that 0.5 parts of ethylene glycol dimethacrylate as a cross-linkable monomer was changed to 0.5 parts of divinylbenzene in production of the particulate polymer.

(Example 10)

Various operations, measurements, and evaluations were performed in the same way as in Example 1 with the exception that a particulate polymer (J) produced as described below was used instead of the particulate polymer (A) in production of the slurry composition. The results are shown in Table 1.

<Production of particulate polymer (J)>

Operations were performed in the same way as in Example 1 to produce a particulate polymer (J) with the exception that the amount of styrene as an aromatic monovinyl monomer was changed from 81.5 parts to 81.9 parts and 0.5 parts of ethylene glycol dimethacrylate as a cross-linkable monomer was changed to 0.1 parts of trimethylolpropane trimethacrylate in production of the particulate polymer.

(Example 11)

Various operations, measurements, and evaluations were performed in the same way as in Example 1 with the exception that a particulate polymer (K) produced as described below was used instead of the particulate polymer (A) in production of the slurry composition. The results are shown in Table 1.

<Production of particulate polymer (K)>

Operations were performed in the same way as in Example 1 to produce a particulate polymer (K) with the exception that the amount of styrene as an aromatic monovinyl monomer was changed from 81.5 parts to 76.8 parts, 0.5 parts of ethylene glycol dimethacrylate as a cross-linkable monomer was changed to 5 parts of glycidyl methacrylate, and 0.2 parts of methacrylic acid as an acid group-containing monomer was further added in production of the particulate polymer.

(Example 12)

Various operations, measurements, and evaluations were performed in the same way as in Example 1 with the exception that a particulate polymer (L) produced as described below was used instead of the particulate polymer (A) in production of the slurry composition. The results are shown in Table 1.

<Production of particulate polymer (L)>

Operations were performed in the same way as in Example 1 to produce a particulate polymer (L) with the exception that the duration of treatment under reduced pressure using an evaporator was changed to 1 hour in production of the particulate polymer.

(Example 13)

Various operations, measurements, and evaluations were performed in the same way as in Example 1 with the exception that a particulate polymer (M) produced as described below was used instead of the particulate polymer (A) in production of the slurry composition. The results are shown in Table 1.

<Production of particulate polymer (M)>

Operations were performed in the same way as in Example 1 to produce a particulate polymer (M) with the exception that the duration of treatment under reduced pressure using an evaporator was changed to 0.5 hours in production of the particulate polymer.

(Example 14)

Various operations, measurements, and evaluations were performed in the same way as in Example 1 with the exception that a water dispersion containing a binder (β) produced as described below was used instead of the water dispersion containing the binder (α) in production of the slurry composition. The results are shown in Table 1.

<Production of water dispersion containing binder (β)>

A reactor including a stirrer was supplied with 70 parts of deionized water, 0.15 parts of polyoxyethylene lauryl ether (EMULGEN® 120 (EMULGEN is a registered trademark in Japan, other countries, or both) produced by Kao Corporation) as an emulsifier, and 0.5 parts of ammonium persulfate as a polymerization initiator. The gas phase was purged with nitrogen gas, and the temperature was raised to 60°C.
Meanwhile, a monomer composition (β) was produced in a separate vessel by mixing 50 parts of deionized water, 0.5 parts of polyoxyethylene lauryl ether (EMULGEN® 120 produced by Kao Corporation) as an emulsifier, 70 parts of 2-ethylhexyl acrylate as a (meth)acrylic acid ester monomer, 25 parts of styrene as an aromatic monovinyl monomer, 1.7 parts of allyl glycidyl ether and 0.3 parts of allyl methacrylate as cross-linkable monomers, and 3 parts of acrylic acid as an acid group-containing monomer.
The obtained monomer composition (β) was continuously added into the above-described reactor including a stirrer over 4 hours to perform polymerization. The reaction was carried out at 70°C during the addition. After the addition was complete, stirring was carried out for a further 3 hours at 80°C, and then the reaction was ended to yield a water dispersion containing a particulate binder (β). The obtained water dispersion containing the binder (β) was used to measure the volume particle diameter D50 and glass-transition temperature of the binder (β). The binder (β) had a volume particle diameter D50 of 0.25 μm and a glass-transition temperature of -35°C.

(Example 15)

Various operations, measurements, and evaluations were performed in the same way as in Example 1 with the exception that 100 parts of alumina as heat-resistant particles was changed to 100 parts of boehmite (H43M produced by Showa Denko K.K.; volume particle diameter D50: 0.8 μm) in production of the slurry composition. The results are shown in Table 1.

(Example 16)

Various operations, measurements, and evaluations were performed in the same way as in Example 1 with the exception that 100 parts of alumina as heat-resistant particles was changed to 100 parts of magnesium hydroxide (MAGSEEDS X-6F produced by Konoshima Chemical Co., Ltd.; volume particle diameter D50: 0.7 $\mu$m) in production of the slurry composition. The results are shown in Table 1.

(Example 17)

Various operations, measurements, and evaluations were performed in the same way as in Example 1 with the exception that 100 parts of alumina as heat-resistant particles was changed to 100 parts of barium sulfate (TS-2 produced by Takehara Kagaku Kogyo Co., Ltd.; volume particle diameter D50: 0.3 $\mu$m) in production of the slurry composition. The results are shown in Table 1.

(Example 18)

Various operations, measurements, and evaluations were performed in the same way as in Example 1 with the exception that 0.5 parts of 1,2-benzo-4-isothiazolin-3-one as an amine compound was changed to 0.5 parts of 2-methyl-4-isothiazolin-3-one in production of the slurry composition. The results are shown in Table 1.

(Example 19)

Various operations, measurements, and evaluations were performed in the same way as in Example 1 with the exception that a water dispersion containing a binder ($\gamma$) produced as described below was used instead of the water dispersion containing the binder ($\alpha$) in production of the slurry composition. The results are shown in Table 1.

<Production of water dispersion containing binder (y)>

A reactor was charged with 150 parts of deionized water, 25 parts of sodium dodecylbenzenesulfonate aqueous solution (concentration 10%) as an emulsifier, 63 parts of styrene as an aromatic monovinyl monomer, 3.5 parts of itaconic acid as a carboxy group-containing monomer, 1 part of 2-hydroxyethyl acrylate as a hydroxy group-containing monomer, and 0.5 parts of t-dodecyl mercaptan as a molecular weight modifier in this order. Next, gas inside the reactor was purged three times with nitrogen, and then 32.5 parts of 1,3-butadiene as a conjugated diene monomer was added into the reactor. The reactor was held at 60°C while 0.5 parts of potassium persulfate as a polymerization initiator was added to initiate a polymerization reaction, and the polymerization reaction was continued under stirring. At the point at which the polymerization conversion rate reached 96%, cooling was performed and 0.1 parts of hydroquinone aqueous solution (concentration 10%) was added as a polymerization inhibitor to quench the polymerization reaction. Residual monomer was subsequently removed using a rotary evaporator with a water temperature of 60°C to obtain a water dispersion containing a binder ($\gamma$). The obtained water dispersion containing the binder ($\gamma$) was used to measure the volume particle diameter D50 and glass-transition temperature of the binder ($\gamma$). The binder ($\gamma$) had a volume particle diameter D50 of 0.15 $\mu$m and a glass-transition temperature of 15°C.

(Comparative Example 1)

Various operations, measurements, and evaluations were performed in the same way as in Example 1 with the exception that a particulate polymer (N) produced as described below was used instead of the particulate polymer (A) in production of the slurry composition. The results are shown in Table 1.

<Production of particulate polymer (N)>

Operations were performed in the same way as in Example 1 to produce a particulate polymer (N) with the exception that the rotation speed of the disperser was changed from 12,000 rpm to 15,000 rpm in production of the particulate polymer.

(Comparative Example 2)

Various operations, measurements, and evaluations were performed in the same way as in Example 1 with the exception that a particulate polymer (O) produced as described below was used instead of the particulate polymer (A) in production of the slurry composition. The results are shown in Table 1.

<Production of particulate polymer (O)>

Operations were performed in the same way as in Example 1 to produce a particulate polymer (O) with the exception that the rotation speed of the disperser was changed from 12,000 rpm to 8,000 rpm in production of the particulate polymer.

In Table 1:

"ST" indicates styrene unit;

"2EHA" indicates 2-ethylhexyl acrylate unit;

"EDMA" indicates ethylene glycol dimethacrylate unit;

"BA" indicates n-butyl acrylate unit;

"DVB" indicates divinylbenzene unit;

"TMP" indicates trimethylolpropane trimethacrylate unit;

"GMA" indicates glycidyl methacrylate unit;

"MAA" indicates methacrylic acid unit;

"AN" indicates acrylonitrile unit;

"AMA" indicates allyl methacrylate unit;

"AGE" indicates allyl glycidyl ether unit;

"AA" indicates acrylic acid unit;

"IA" indicates itaconic acid unit;

"2HEA" indicates 2-hydroxyethyl acrylate unit;

"BD" indicates butadiene unit;

"Suspension" indicates particulate polymer obtained by suspension polymerization;

"Emulsion" indicates particulate polymer obtained by emulsion polymerization and aggregation;

"BIT" indicates 1,2-benzo-4-isothiazolin-3-one; and

"MIT" indicates 2-methyl-4-isothiazolin-3-one.

[Table 1]

| | | Examples | | | | | | | | | | | | | | | | | | Comparative examples | |
|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 | 19 | 1 | 2 |
| Composition for electrochemical device functional layer — Particulate polymer — Chemical composition [mass%] | ST | 81.5 | 81.5 | 81.5 | 81.5 | 81.5 | 70.7 | 81.8 | 77 | 81.5 | 81.9 | 76.8 | 81.5 | 81.5 | 81.5 | 81.5 | 81.5 | 81.5 | 81.5 | 81.5 | 81.5 | 81.5 |
| | 2EHA | 18 | 18 | 18 | 18 | 18 | 8 | 18 | 18 | 18 | 18 | 18 | 18 | 18 | 18 | 18 | 18 | 18 | 18 | 18 | 18 | 18 |
| | EDMA | 0.5 | 0.5 | 0.5 | 0.5 | 0.5 | 0.3 | 0.2 | 5 | | | | 0.5 | 0.5 | 0.5 | 0.5 | 0.5 | 0.5 | 0.5 | 0.5 | 0.5 | 0.5 |
| | BA | | | | | | 16 | | | | | | | | | | | | | | | |
| | DVB | | | | | | | | | 0.5 | | | | | | | | | | | | |
| | TMP | | | | | | | | | | 0.1 | | | | | | | | | | | |
| | GMA | | | | | | | | | | | 5 | | | | | | | | | | |
| | MAA | | | | | | 5 | | | | | 0.2 | | | | | | | | | | |
| | Volume particle diameter D50 [μm] | 4.1 | 2.3 | 8.2 | 3.8 | 4.5 | 3.5 | 4.1 | 4.0 | 4.0 | 4.0 | 4.0 | 4.1 | 4.1 | 4.1 | 4.1 | 4.1 | 4.1 | 4.1 | 4.1 | 5.9 | 6.2 |
| | Proportion of large particles [volume%] | 2.7 | 3.0 | 3.2 | 1.2 | 4.3 | 4.7 | 2.7 | 2.7 | 2.7 | 2.7 | 2.7 | 2.7 | 2.7 | 2.7 | 2.7 | 2.7 | 2.7 | 2.7 | 2.7 | 0.3 | 6.7 |
| | Proportion of coarse particles [volume%] | 0.5 | 0.2 | 1.1 | 0.4 | 1.4 | 1.5 | 0.5 | 0.5 | 0.5 | 0.5 | 0.6 | 0.5 | 0.5 | 0.5 | 0.5 | 0.5 | 0.5 | 0.5 | 0.5 | 0.1 | 2.3 |
| | Average circularity [-] | 0.98 | 0.98 | 0.98 | 0.98 | 0.98 | 0.97 | 0.98 | 0.98 | 0.98 | 0.98 | 0.98 | 0.98 | 0.98 | 0.98 | 0.98 | 0.98 | 0.98 | 0.98 | 0.98 | 0.98 | 0.98 |
| | Proportion by number of particles having circularity of less than 0.95 [%] | 4 | 4 | 4 | 3 | 6 | 8 | 4 | 6 | 20 | 25 | 40 | 26 | 31 | 22 | 22 | 22 | 22 | 22 | 22 | 22 | 22 |
| | Amount of elution into THF [mass%] | 22 | 22 | 22 | 22 | 22 | 15 | 47 | 6 | 20 | 25 | 40 | 26 | 31 | 22 | 22 | 22 | 22 | 22 | 22 | 22 | 22 |
| | Glass-transition temperature [°C] | 65 | 65 | 65 | 65 | 65 | 66 | 63 | 67 | 64 | 68 | 58 | 65 | 65 | 65 | 65 | 65 | 65 | 65 | 65 | 65 | 65 |
| | Proportional content of polymerization initiator decomposition product [ppm] | 4 | 4 | 4 | 4 | 4 | 1 | 4 | 4 | 4 | 4 | 4 | 8 | 16 | 4 | 4 | 4 | 4 | 4 | 4 | 4 | 4 |
| | Polymerization method | Suspension | Suspension | Suspension | Suspension | Suspension | Emulsion | Suspension | Suspension | Suspension | Suspension | Suspension | Suspension | Suspension | Suspension | Suspension | Suspension | Suspension | Suspension | Suspension | Suspension | Suspension |
| | Rotation speed of disperser [rpm] | 12000 | 12000 | 12000 | 13500 | 10000 | – | 12000 | 12000 | 12000 | 12000 | 12000 | 12000 | 12000 | 12000 | 12000 | 12000 | 12000 | 12000 | 12000 | 15000 | 8000 |
| Binder — Chemical composition [mass%] | BA | 94 | 94 | 94 | 94 | 94 | 94 | 94 | 94 | 94 | 94 | 94 | 94 | 94 | | 94 | 94 | 94 | 94 | | 94 | 94 |
| | AN | 2 | 2 | 2 | 1 | 2 | 1 | 2 | 1 | 2 | 2 | 1 | 2 | 2 | 0.3 | 1 | 2 | 2 | 2 | | 2 | 2 |
| | AMA | 2 | 1 | 2 | 2 | 2 | 2 | 2 | 2 | 1 | 2 | 1 | 2 | 2 | | 2 | 2 | 2 | 2 | | 1 | 2 |
| | MAA | 1 | | 1 | 1 | 1 | 1 | 1 | 1 | 1 | 1 | 1 | 1 | 1 | | | 1 | 1 | 1 | | 1 | 1 |
| | AGE | 1 | 1 | 1 | 1 | 1 | | 1 | 1 | 1 | 1 | 1 | 1 | 1 | | | | | | | 1 | 1 |
| | 2EHA | | | | | | | | | | | | | | 1.7 | | | | | | | |
| | ST | | | | | | | | | | | | | | 70 | | | | | 63 | | |
| | AA | | | | | | | | | | | | | | 25 | | | | | 3.5 | | |
| | IA | | | | | | | | | | | | | | 3 | | | | | 1 | | |
| | 2HEA | | | | | | | | | | | | | | | | | | | 32.5 | | |
| | BD | | | | | | | | | | | | | | | | | | | | | |
| | Content per 100 parts by mass of particulate polymer [parts by mass] | 56 | 56 | 56 | 56 | 56 | 56 | 56 | 56 | 56 | 56 | 56 | 56 | 56 | 56 | 56 | 56 | 56 | 56 | 56 | 56 | 56 |
| Heat-resistant particles | Content per 100 parts by mass in total of heat-resistant particles [parts by mass] | 6 | 6 | 6 | 6 | 6 | 6 | 6 | 6 | 6 | 6 | 6 | 6 | 6 | 6 | 6 | 6 | 6 | 6 | 6 | 6 | 6 |
| | Volume particle diameter D50 [μm] | 0.4 | 0.4 | 0.4 | 0.4 | 0.4 | 0.4 | 0.4 | 0.4 | 0.4 | 0.4 | 0.4 | 0.4 | 0.4 | 0.25 | 0.4 | 0.4 | 0.4 | 0.4 | 0.15 | 0.4 | 0.4 |
| | Glass-transition temperature [°C] | -40 | -40 | -40 | -40 | -40 | -40 | -40 | -40 | -40 | -40 | -40 | -40 | -40 | -35 | -40 | -40 | -40 | -40 | 15 | -40 | -40 |
| | Material | Alumina | Alumina | Alumina | Alumina | Alumina | Alumina | Alumina | Alumina | Alumina | Alumina | Alumina | Alumina | Alumina | Alumina | Boehmite | Magnesium hydroxide | Barium sulfate | Alumina | Alumina | Alumina | Alumina |
| | Volume particle diameter D50 [μm] | 0.7 | 0.7 | 0.7 | 0.7 | 0.7 | 0.7 | 0.7 | 0.7 | 0.7 | 0.7 | 0.7 | 0.7 | 0.7 | 0.7 | 0.8 | 0.7 | 0.3 | 0.7 | 0.7 | 0.7 | 0.7 |
| Amine compound | Type | BIT | BIT | BIT | BIT | BIT | BIT | BIT | BIT | BIT | BIT | BIT | BIT | BIT | BIT | BIT | BIT | BIT | MIT | BIT | BIT | BIT |
| | Volume ratio of particulate polymer relative to heat-resistant particles (volume of particulate polymer/volume of heat-resistant particles) | 30/70 | 30/70 | 30/70 | 30/70 | 30/70 | 30/70 | 30/70 | 30/70 | 30/70 | 30/70 | 30/70 | 30/70 | 30/70 | 30/70 | 30/70 | 30/70 | 30/70 | 30/70 | 30/70 | 30/70 | 30/70 |
| | Thickness of heat-resistant particle layer [μm] | 2 | 2 | 2 | 2 | 2 | 2 | 2 | 2 | 2 | 2 | 2 | 2 | 2 | 2 | 2 | 2 | 2 | 2 | 2 | 2 | 2 |
| | Volume particle diameter D50 of particle polymer/Thickness of heat-resistant particle layer | 2.1 | 1.2 | 4.1 | 1.9 | 2.3 | 1.8 | 2.1 | 2.0 | 2.0 | 2.0 | 2.0 | 2.1 | 2.1 | 2.1 | 2.1 | 2.1 | 2.1 | 2.1 | 2.1 | 3.0 | 3.1 |
| Evaluation | Wet adhesiveness | A | A | B | B | B | A | A | B | A | A | A | A | A | A | A | A | A | A | A | C | C |
| | Dry adhesiveness | A | B | B | B | B | B | A | B | A | A | A | A | B | A | A | A | A | A | A | C | B |
| | Blocking resistance of functional layer | A | A | A | A | A | A | B | A | A | A | B | B | B | A | A | A | A | A | A | B | A |
| | Cycle characteristics of secondary battery | A | A | A | A | A | A | B | A | A | A | A | A | A | A | A | A | A | A | A | A | C |

As can clearly be seen from Table 1, a functional layer formed using the composition for an electrochemical device functional layer of any of Examples 1 to 19 has excellent wet adhesiveness.

INDUSTRIAL APPLICABILITY

According to the present disclosure, it is possible to provide a composition for an electrochemical device functional layer that is capable of forming a functional layer having excellent wet adhesiveness.

Moreover, according to the present disclosure, it is possible to provide a laminate for an electrochemical device that includes a functional layer obtained using this composition for an electrochemical device functional layer and an electrochemical device that includes this laminate for an electrochemical device.

**Claims**

1. A composition for an electrochemical device functional layer comprising a particulate polymer, wherein

   the particulate polymer has a volume particle diameter D50 of not less than 1.0 $\mu$m and not more than 10.0 $\mu$m, and

   the particulate polymer has a particle size distribution $\alpha$ in which a proportion constituted by particles having a particle diameter of at least 1.5 times the volume particle diameter D50 is not less than 0.5 volume% and not more than 5.0 volume% when the particulate polymer is taken to be 100 volume%.

2. The composition for an electrochemical device functional layer according to claim 1, wherein

   the particulate polymer has an average circularity of not less than 0.95 and not more than 0.99, and

   the particulate polymer has a circularity distribution in which a proportion constituted by particles having a circularity of less than 0.95 is less than 10%, by number, relative to the particulate polymer.

3. The composition for an electrochemical device functional layer according to claim 1 or 2, wherein an amount of elution of the particulate polymer into tetrahydrofuran is not less than 5 mass% and not more than 50 mass%.

4. The composition for an electrochemical device functional layer according to any one of claims 1 to 3, wherein the particulate polymer is formed of particles containing a polymer that includes:

   an aromatic monovinyl monomer unit; and

   at least one type of cross-linkable monomer unit selected from the group consisting of an aromatic divinyl monomer unit, a di(meth)acrylic acid ester monomer unit, a tri(meth)acrylic acid ester monomer unit, and an epoxy group-containing ethylenically unsaturated monomer unit, and

   proportional content of the cross-linkable monomer unit is not less than 0.1 mass% and not more than 5 mass% when all repeating units in the polymer are taken to be 100 mass%.

5. The composition for an electrochemical device functional layer according to claim 4, wherein proportional content of a polymerization initiator decomposition product in the particles forming the particulate polymer is 20 ppm or less relative to total mass of the particles forming the particulate polymer.

6. The composition for an electrochemical device functional layer according to any one of claims 1 to 5, further comprising a binder.

7. The composition for an electrochemical device functional layer according to claim 6, wherein the binder includes a (meth)acrylic acid ester monomer unit and an acid group-containing monomer unit.

8. The composition for an electrochemical device functional layer according to any one of claims 1 to 7, further comprising an amine compound.

9. The composition for an electrochemical device functional layer according to any one of claims 1 to 8, further comprising non-conductive heat-resistant particles.

10. A laminate for an electrochemical device comprising: a substrate; and a functional layer formed on the substrate, wherein the functional layer is obtained using the composition for an electrochemical device functional layer according to any one of claims 1 to 9.

11. An electrochemical device comprising the laminate for an electrochemical device according to claim 10.

## INTERNATIONAL SEARCH REPORT

International application No.

**PCT/JP2023/008374**

### A. CLASSIFICATION OF SUBJECT MATTER

*H01M 50/443*(2021.01)i; *C08F 257/02*(2006.01)i; *H01G 11/24*(2013.01)i; *H01G 11/30*(2013.01)i; *H01G 11/52*(2013.01)i; *H01M 4/13*(2010.01)i; *H01M 4/62*(2006.01)i; *H01M 50/411*(2021.01)i; *H01M 50/414*(2021.01)i; *H01M 50/42*(2021.01)i; *H01M 50/434*(2021.01)i; *H01M 50/446*(2021.01)i; *H01M 50/449*(2021.01)i; *H01M 50/489*(2021.01)i
FI: H01M50/443 B; H01M4/13; H01M50/449; H01M50/489; H01M50/42; H01M50/414; H01M50/443 E; H01M50/411; H01M50/434; H01M50/443 M; H01M50/446; C08F257/02; H01G11/24; H01G11/30; H01G11/52; H01M4/62 Z

According to International Patent Classification (IPC) or to both national classification and IPC

### B. FIELDS SEARCHED

Minimum documentation searched (classification system followed by classification symbols)

H01M50/443; C08F257/02; H01G11/24; H01G11/30; H01G11/52; H01M4/13; H01M4/62; H01M50/411; H01M50/414; H01M50/42; H01M50/434; H01M50/446; H01M50/449; H01M50/489

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/175292 A1 (ZEON CORP.) 03 September 2020 (2020-09-03) entire text, all drawings | 1-11 |
| A | WO 2021/200049 A1 (ZEON CORP.) 07 October 2021 (2021-10-07) all | 1-11 |
| A | WO 2021/161842 A1 (ZEON CORP.) 19 August 2021 (2021-08-19) entire text, all drawings | 1-11 |
| A | WO 2018/163969 A1 (ZEON CORP.) 13 September 2018 (2018-09-13) entire text, all drawings | 1-11 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 May 2023** | **30 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2023/008374**

| Patent document cited in search report | | | Publication date (day/month/year) | Patent family member(s) | | | Publication date (day/month/year) |
|---|---|---|---|---|---|---|---|
| WO | 2020/175292 | A1 | 03 September 2020 | US all | 2022/0123433 | A1 | |
| | | | | EP | 3933864 | A1 | |
| | | | | CN | 112930577 | A | |
| | | | | KR | 10-2021-0127925 | A | |
| WO | 2021/200049 | A1 | 07 October 2021 | CN all | 115336096 | A | |
| | | | | KR | 10-2022-0161301 | A | |
| WO | 2021/161842 | A1 | 19 August 2021 | EP all | 4106046 | A1 | |
| | | | | CN | 115023854 | A | |
| | | | | KR | 10-2022-0140491 | A | |
| WO | 2018/163969 | A1 | 13 September 2018 | US all | 2020/0052301 | A1 | |
| | | | | US | 2022/0006091 | A1 | |
| | | | | EP | 3595039 | A1 | |
| | | | | CN | 110383530 | A | |
| | | | | KR | 10-2019-0121312 | A | |

Form PCT/ISA/210 (patent family annex) (January 2015)

**REFERENCES CITED IN THE DESCRIPTION**

**Patent documents cited in the description**

- WO 2020175292 A1
- JP 2012204303 A

- JP 2013145763 A